(19) Europäisches Patentamt / European Patent Office / Office européen des brevets

(11) **EP 3 592 878 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **18730227.8**

(22) Anmeldetag: **15.05.2018**

(51) Int Cl.:
*C23C 2/00* (2006.01)      *C23C 2/02* (2006.01)
*C23C 2/04* (2006.01)      *C23C 2/06* (2006.01)
*C23C 2/26* (2006.01)      *F16B 45/00* (2006.01)

(86) Internationale Anmeldenummer:
**PCT/EP2018/062491**

(87) Internationale Veröffentlichungsnummer:
**WO 2019/029856 (14.02.2019 Gazette 2019/07)**

(54) **FEUERVERZINKUNGSVERFAHREN, TRAGE- UND/ODER HALTEMITTEL FÜR DIE FEUERVERZINKUNG, SOWIE BESCHICHTUNGSVERFAHREN DES TRAGE- UND/ODER HALTEMITTELS**

HOT-DIP GALVANIZING METHOD, CARRYING AND/OR HOLDING MEANS FOR THE HOT-DIP GALVANIZING AND METHOD OF COATING THE CARRYING AND/OR HOLDING MEANS

PROCÉDÉ DE GALVANISATION À CHAUD, MOYENS DE SUPPORT ET/OU DE FIXATION POUR LA GALVANISATION À CHAUD, AINSI QUE PROCÉDÉ DE DÉPÔT DES MOYENS DE SUPPORT ET/OU DE FIXATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.08.2017 DE 102017117860**
**29.08.2017 DE 102017008098**
**08.09.2017 DE 102017120782**

(43) Veröffentlichungstag der Anmeldung:
**15.01.2020 Patentblatt 2020/03**

(73) Patentinhaber: **Fontaine Holdings NV**
**3530 Houthalen (BE)**

(72) Erfinder: **PINGER, Thomas**
**45721 Haltern am See (DE)**

(74) Vertreter: **Strehlke, Ingo Kurt**
**Von Rohr**
**Patentanwälte Partnerschaft mbB**
**Rüttenscheider Straße 62**
**45130 Essen (DE)**

(56) Entgegenhaltungen:
**WO-A1-02/070616          DE-A1- 3 720 965**
**DE-A1- 10 124 468          DE-T2- 60 124 767**
**DE-U1-202009 005 258**

EP 3 592 878 B1

**Beschreibung**

Die vorliegende Erfindung betrifft das technische Gebiet der Verzinkung von eisenbasierten bzw. eisenhaltigen Bauteilen, insbesondere stahlbasierten bzw. stahlhaltigen Bauteilen (Stahlbauteilen), vorzugsweise für die Automobil- bzw. Kraftfahrzeugindustrie, aber auch für andere technische Anwendungsgebiete (z. B. für die Bauindustrie, den Bereich des aligemeinen Maschinenbaus, die Elektroindustrie etc.), mittels Feuerverzinkung (Schmelztauchverzinkung).

Insbesondere betrifft die vorliegende Erfindung ein Verfahren zur Feuerverzinkung eines Bauteils ("Feuerverzinkungsverfahren"), insbesondere eines Eisen- oder Stahlbauteils. Des Weiteren betrifft die vorliegende Erfindung ein Verfahren zur Beschichtung für ein in einem Feuerverzinkungsverfahren verwendbares Trage- und/oder Haltemittel ("Beschichtungsverfahren") sowie ein auf diese Weise erhältliches bzw. beschichtetes Trage- und/oder Haltemittel (d. h. das mit dem erfindungsgemäßen Beschichtungsverfahre erhältliche Produkt).

Metallische Bauteile jeglicher Art aus eisenhaltigem Material, insbesondere Bauteile aus Stahl, erfordern anwendungsbedingt oftmals einen effizienten Schutz vor Korrosion. Insbesondere Bauteile aus Stahl für Kraftfahrzeuge (Kfz), wie z. B. Pkw, Lkw, Nutzfahrzeuge etc., aber auch für andere technische Bereiche (z. B. Bauindustrie, Maschinenbau, Elektroindustrie etc.), erfordern einen effizienten Korrosionsschutz, welcher auch Langzeitbelastungen standhält.

Das wohl wichtigste Verfahren zum Korrosionsschutz von Stahl durch metallische Zinküberzüge ist die sogenannte Feuerverzinkung (synonym auch Schmelztauchverzinkung genannt). Dabei wird Stahl kontinuierlich (z. B. Band und Draht) oder stückweise (z. B. Bauteile) bei Temperaturen von etwa 450 °C bis 600 °C in einen beheizten Kessel mit flüssigem Zink getaucht (Schmelzpunkt von Zink: 419,5 °C), so dass sich auf der Stahloberfläche eine widerstandsfähige intermetallische Phase aus Eisen und Zink und darüber eine sehr festhaftende reine Zinkschicht ausbilden.

Die Feuerverzinkung ist somit eine seit vielen Jahren anerkannte und bewährte Methode, um Bauteile bzw. Komponenten aus Eisenwerkstoffen, insbesondere Stahlwerkstoffen, vor Korrosion zu schützen. Wie zuvor geschildert, wird hierbei im Allgemeinen das typischerweise vorgereinigte bzw. vorbehandelte Bauteil in ein flüssigheißes Zinkbad eingetaucht, wobei es insbesondere zur Reaktion mit der Zinkschmelze und, daraus resultierend, zur Ausbildung einer relativ dünnen, metallurgisch mit dem Grundwerkstoff verbundenen Zinkschicht kommt.

Bei der Feuerverzinkung wird zwischen diskontinuierlicher Stückverzinkung (vgl. z. B. DIN EN ISO 1461 und ASTM A 1072) und kontinuierlicher Band- und Drahtverzinkung (vgl. z. B. DIN EN 10143 und DIN EN 10346) unterschieden. Sowohl das Stückverzinken als auch das Band- und Drahtverzinken sind genormte bzw. standardisierte Verfahren. Kontinuierlich verzinktes Stahlband und kontinuierlich verzinkter Draht sind jeweils ein Vor- bzw. Zwischenprodukt (Halbzeug), welches nach dem Verzinken, insbesondere durch Umformen, Stanzen, Zuschneiden etc., weiterverarbeitet wird, wohingegen durch Stückverzinken zu schützende Bauteile zuerst vollständig gefertigt und erst danach feuerverzinkt werden (wodurch die Bauteile rundum vor Korrosion geschützt werden).

Die Feuerverzinkung liefert sowohl einen aktiven als auch passiven Korrosionsschutz. Der passive Schutz erfolgt durch die Barrierewirkung des Zinküberzuges. Der aktive Korrosionsschutz entsteht aufgrund der kathodischen Wirkung des Zinküberzuges. Gegenüber edleren Metallen der elektrochemischen Spannungsreihe, wie z. B. Eisen, dient Zink als Opferanode, welche das darunter liegende Eisen solange vor Korrosion schützt, bis sie selbst vollständig korrodiert ist.

Bei der sogenannten Stückverzinkung nach DIN EN ISO 1461 erfolgt das Feuerverzinken von meist größeren Stahlbauteilen und -konstruktionen. Dabei werden stahlbasierte Rohlinge oder fertige Werkstücke (Bauteile) nach einer Vorbehandlung in das Zinkschmelzbad eingetaucht. Durch das Tauchen können insbesondere auch Innenflächen, Schweißnähte und schwer zugängliche Stellen der zu verzinkenden Werkstücke bzw. Bauteile gut erreicht werden.Die konventionelle Feuerverzinkung, insbesondere Tauchverzinkung, basiert insbesondere auf dem Tauchen von Eisen- bzw. Stahlbauteilen in eine Zinkschmelze unter Ausbildung einer Zinkbeschichtung bzw. eines Zinküberzugs auf der Oberfläche der Bauteile. Zur Sicherstellung des Haftvermögens, der Geschlossenheit und der Einheitlichkeit des Zinküberzuges ist vorab im Allgemeinen eine sorgfältige Oberflächenvorbereitung der zu verzinkenden Bauteile erforderlich, welche üblicherweise eine Entfettung mit nachfolgendem Spülvorgang, eine sich anschließende saure Beizung mit nachfolgendem Spülvorgang und schließlich eine Flussmittelbehandlung (d. h. ein sogenanntes Fluxen) mit nachfolgendem Trocknungsvorgang umfasst.

Aus Gründen der Prozessökonomie und der Wirtschaftlichkeit werden bei der Stückverzinkung identischer oder gleichartiger Bauteile (z. B. Serienproduktion von Kfz-Bauteilen) diese typischerweise für den gesamten Prozess zusammengeführt bzw. gruppiert (insbesondere mittels eines gemeinsamen, beispielsweise als Traverse oder Gestell ausgebildeten Warenträgers bzw. Trage- und/oder Haltemittels oder einer gemeinsamen Halte- bzw. Befestigungsvorrichtung für eine Vielzahl dieser identischen bzw. gleichartigen Bauteile). Die Bauteile werden dann über Trage- und/oder Haltemittel, wie z. B. Anschlagmittel, Anbindedrähte oder dergleichen, befestigt. Anschließend werden die Bauteile im gruppierten Zustand über das Trage- und/oder Haltemittel den einzelnen Behandlungsschritten bzw. -stufen der Feuerverzinkung zugeführt.

Der typische Verfahrensablauf beim konventionellen Stückverzinken mittels Feuerverzinkung gestaltet sich üblicherweise wie folgt:

Zunächst werden die Bauteiloberflächen der betreffenden Bauteile einer Entfettung unterzogen, um Rückstände von Fetten und Ölen zu entfernen, wobei als Entfettungsmittel üblicherweise wässrige alkalische oder saure Entfettungsmittel zur Anwendung kommen können. Nach der Reinigung im Entfettungsbad schließt sich üblicherweise ein Spülvorgang an, typischerweise durch Eintauchen in ein Wasserbad, um ein Verschleppen von Entfettungsmitteln mit dem Verzinkungsgut in den nachfolgenden Prozessschritt des Beizens zu vermeiden, wobei dies insbesondere bei einem Wechsel von alkalischer Entfettung auf eine saure Beize von hoher Bedeutung ist.

Anschließend erfolgt eine Beizbehandlung (Beizen), welche insbesondere zur Entfernung von arteigenen Verunreinigungen, wie z. B. Rost und Zunder, von der Stahloberfläche dient. Das Beizen erfolgt üblicherweise in verdünnter Salzsäure, wobei die Dauer des Beizvorgangs unter anderem vom Verunreinigungszustand (z. B. Verrostungsgrad) des Verzinkungsgutes und der Säurekonzentration und Temperatur des Beizbades abhängig ist. Zur Vermeidung bzw. Minimierung von Verschleppungen von Säure- und/oder Salzresten mit dem Verzinkungsgut erfolgt nach der Beizbehandlung üblicherweise ein Spülvorgang.

Nachfolgend erfolgt dann das sogenannte Fluxen (synonym auch als Flussmittelbehandlung bezeichnet), wobei die zuvor entfettete und gebeizte Stahloberfläche mit einem sogenannten Flussmittel, welches typischerweise eine wässrige Lösung von anorganischen Chloriden, am häufigsten mit einer Mischung aus Zinkchlorid ($ZnCl_2$) und Ammoniumchlorid ($NH_4Cl$), umfasst. Einerseits ist es Aufgabe des Flussmittels, vor der Reaktion der Stahloberfläche mit dem schmelzflüssigen Zink eine letzte intensive Feinstreinigung der Stahloberfläche vorzunehmen und die Oxidhaut der Zinkoberfläche aufzulösen sowie eine erneute Oxidation der Stahloberfläche bis zum Verzinkungsvorgang zu verhindern. Andererseits soll das Flussmittel die Benetzungsfähigkeit zwischen der Stahloberfläche und dem schmelzflüssigen Zink erhöhen. Nach der Flussmittelbehandlung erfolgt dann üblicherweise eine Trocknung, um einen festen Flussmittelfilm auf der Stahloberfläche zu erzeugen und anhaftendes Wasser zu entfernen, so dass nachfolgend unerwünschte Reaktionen (insbesondere die Bildung von Wasserdampf) im flüssigen Zinktauchbad vermieden werden.

Die auf die vorgenannte Weise vorbehandelten Bauteile werden dann durch Eintauchen in die flüssige Zinkschmelze feuerverzinkt. Bei der Feuerverzinkung mit reinem Zink liegt der Zinkgehalt der Schmelze gemäß DIN EN ISO 1461 bei mindestens 98,0 Gew.-%. Nach dem Eintauchen des Verzinkungsgutes in das geschmolzene Zink verbleibt dieses für eine ausreichende Zeitdauer im Zinkschmelzbad, insbesondere bis das Verzinkungsgut dessen Temperatur angenommen hat und mit einer Zinkschicht überzogen ist. Typischerweise wird die Oberfläche der Zinkschmelze insbesondere von Oxiden, Zinkasche, Flussmittelresten und dergleichen gereinigt, bevor dann das Verzinkungsgut wieder aus der Zinkschmelze herausgezogen wird. Das auf diese Weise feuerverzinkte Bauteil wird dann einem Abkühlvorgang (z. B. an der Luft oder in einem Wasserbad) unterzogen. Abschließend werden gegebenenfalls vorhandene Trage- und/oder Haltemittel für das Bauteil, wie z. B. Anschlagmittel, Anbindedrähte oder dergleichen, entfernt.

Im Anschluss an den Verzinkungsprozess kann üblicherweise eine zum Teil aufwendige Nachbearbeitung oder Nachbehandlung erfolgen. Dabei werden z. B. überschüssige Zinkbadrückstände, insbesondere sogenannte Tropfnasen des an den Kanten erstarrenden Zinks sowie Oxid- oder Ascherückstände, welche an dem Bauteil anhaften, so weit wie möglich entfernt.

Ein Kriterium für die Güte einer Feuerverzinkung ist die Dicke des Zinküberzuges in Mikrometern ($\mu$m). In der Norm DIN EN ISO 1461 sind die Mindestwerte der geforderten Überzugsdicken angegeben, wie sie je nach Materialdicke beim Stückverzinken zu liefern sind. In der Praxis liegen die Schichtdicken deutlich über den in der DIN EN ISO 1461 angegebenen Mindestschichtdicken. Im Allgemeinen haben durch Stückverzinken hergestellte Zinküberzüge eine Dicke im Bereich von 50 bis 200 $\mu$m und sogar mehr.

Beim Verzinkungsvorgang bildet sich als Folge einer wechselseitigen Diffusion des flüssigen Zinks mit der Stahloberfläche auf dem Stahlteil ein Überzug verschiedenartig zusammengesetzter, intermetallischer Eisen/Zink-Phasen. Beim Herausziehen der feuerverzinkten Gegenstände bleibt auf der obersten Phase noch eine - auch als Reinzinkschicht bezeichnete - Schicht aus Zink haften, welche in ihrer Zusammensetzung der Zinkschmelze entspricht. Wegen der hohen Temperaturen beim Schmelztauchen bildet sich auf der Stahloberfläche somit zunächst eine relativ spröde Schicht auf Basis einer Legierung (Mischkristalle) zwischen Eisen und Zink aus und darüber erst die reine Zinkschicht. Die relativ spröde Eisen/Zink-Phase verbessert zwar die Haftfestigkeit mit dem Grundmaterial, erschwert aber die Umformbarkeit des verzinkten Stahls. Höhere Siliciumgehalte im Stahl, wie sie insbesondere zur sogenannten Beruhigung des Stahls während dessen Herstellung eingesetzt werden, führen zu einer erhöhten Reaktivität zwischen der Zinkschmelze und dem Grundmaterial und infolgedessen zu einem starken Wachstum der Eisen/Zink-Phase. Auf diese Weise kommt es zur Bildung von relativ großen Gesamtschichtdicken. Hierdurch wird zwar eine sehr lange Korrosionsschutzdauer ermöglicht, es erhöht sich jedoch auch mit zunehmender Zinkschichtdicke die Gefahr, dass die Schicht unter mechanischer Belastung, insbesondere lokalen schlagartigen Einwirkungen, abplatzt und die Korrosionsschutzwirkung hierdurch gestört wird.

Um dem zuvor geschilderten Problem des Auftretens der schnell aufwachsenden, spröden und dicken Eisen/Zink-Phase entgegenzuwirken und auch geringere Schichtdicken mit gleichzeitig hohem Korrosionsschutz bei der Verzinkung zu ermöglichen, ist es aus dem Stand der Technik bekannt, der Zinkschmelze bzw. dem flüssigen Zinkbad zusätzlich Aluminium zuzusetzen. Beispielsweise wird durch eine Zugabe von 5 Gew.-% Aluminium zu einer flüssigen Zinkschmelze eine Zink/Aluminium-Legierung mit einer niedrigeren Schmelztemperatur gegenüber reinem Zink erzeugt. Durch die Verwendung einer Zink/Aluminium-Schmelze (Zn/Al-Schmelze) bzw. eines flüssigen Zink/Aluminium-Bades (Zn/Al-Bad) lassen sich einerseits deutlich geringere Schichtdicken für einen verlässlichen Korrosionsschutz realisieren (im Allgemeinen unterhalb von 50 μm); andererseits unterbleibt durch die Zink/Aluminium-Schmelze die Ausbildung der spröden Eisen/Zink-Phase, da das Aluminium - ohne sich auf ein bestimmte Theorie festzulegen - sozusagen zunächst eine Sperrschicht auf der Stahloberfläche des betreffenden Bauteils ausbildet, auf weiche dann die eigentliche Zinkschicht abgeschieden wird.

Mit einer Zink/Aluminium-Schmelze feuerverzinkte Bauteile lassen sich daher problemlos umformen, weisen aber dennoch - trotz der signifikant geringeren Schichtdicke im Vergleich zu einer konventionellen Feuerverzinkung mit einer quasi aluminiumfreien Zinkschmelze - verbesserte Korrosionsschutzeigenschaften auf.

Eine im Feuerverzinkungsbad eingesetzte Zink/Aluminium-Legierung weist gegenüber Reinzink verbesserte Fluiditätseigenschaften auf. Außerdem weisen Zinküberzüge, welche mittels unter Verwendung derartiger Zink/AluminiumLegierungen durchgeführter Feuerverzinkungen erzeugt sind, eine größere Korrosionsbeständigkeit (welche zwei- bis sechsmal besser ist als die von Reinzink), eine bessere Optik, eine verbesserte Formbarkeit und eine bessere Lackierbarkeit auf als aus Reinzink gebildete Zinküberzüge. Überdies lassen sich mit dieser Technologie auch bleifreie Zinküberzüge herstellen.

Ein solches Feuerverzinkungsverfahren unter Verwendung einer Zink/AluminiumSchmelze bzw. unter Verwendung einer Zink/Aluminium-Feuerverzinkungsbades ist beispielsweise bekannt aus der WO 2002/042512 A1 und den betreffenden Druckschriftäquivalenten zu dieser Patentfamilie (vgl. z.B. EP 1 352 100 B1, DE 601 24 767 T2 und US 2003/0219543 A1). Dort werden auch geeignete Flussmittel für die Feuerverzinkung mittels Zink/Aluminium-Schmelzbäder offenbart, da Flussmittelzusammensetzungen für Zink/Aluminium-Feuerverzinkungsbäder anders beschaffen sein müssen als solche für die konventionelle Feuerverzinkung mit Reinzink. Mit dem dort offenbarten Verfahren lassen sich Korrosionsschutzüberzüge mit sehr geringen Schichtdicken (im Allgemeinen deutlich unterhalb von 50 μm und typischerweise im Bereich von 2 bis 20 μm) und mit sehr geringem Gewicht bei hoher Kosteneffizienz erzeugen, weshalb das dort beschriebene Verfahren kommerziell unter der Bezeichnung microZINQ®-Verfahren angewendet wird.

Im Hinblick auf die Ausbildung der Zinkschicht und deren Eigenschaften hat sich also gezeigt, dass diese über Legierungselemente in der Zinkschmelze maßgeblich beeinflusst werden können. Als eines der wichtigsten Elemente ist hierbei Aluminium zu nennen: So hat sich gezeigt, dass bereits mit einem Aluminiumgehalt in der Zinkschmelze von 100 ppm (gewichtsbasiert) die Optik der entstehenden Zinkschicht hin zu einem helleren, glänzenderen Aussehen verbessert werden kann. Mit zunehmendem Aluminiumgehalt in der Zinkschmelze bis 1.000 ppm (gewichtsbasiert) nimmt dieser Effekt stetig zu. Des Weiteren hat sich gezeigt, dass sich - wie zuvor bereits geschildert - ab einem Aluminiumgehalt in der Zinkschmelze von 0,12 Gew.-% eine intermetallische Fe/Al-Phase zwischen dem Eisenwerkstoff und der Zinkschicht bildet, welche dazu führt, dass die sonst üblichen Diffusionsprozesse zwischen Eisen und Zinkschmelze inhibiert werden und somit das Aufwachsen der Zn/Fe-Phasen signifikant verringert wird; als Folge hiervon resultieren deshalb ab diesem Aluminiumgehalt in der Zinkschmelze wesentlich dünnere Zinkschichten. Schließlich hat sich gezeigt, dass grundsätzlich mit zunehmendem Aluminiumgehalt in der Zinkschmelze die Korrosionsschutzwirkung der resultierenden Zinkschicht zunimmt; Grundlage hierfür ist, dass die Al/Zn-Verbindungen schneller deutlich stabilere Deckschichten bilden.

Bekannte Beispiele für die kommerzielle Verwendung von aluminiumhaltigen Zinkschmelzen sind das sogenannte Galfan®-Verfahren und das vorgenannte microZINQ®-Verfahren mit einem Aluminiumgehalt in der Zinkschmelze typischerweise im Bereich von 4,2 Gew.-% bis 6,2 Gew.-%. Der Vorteil dieser Legierung liegt unter anderem darin, dass um den Mittelwert von 5 Gew.-% eine eutektische Zusammensetzung des Al/Zn-Systems mit einem Schmelzpunkt von 382 °C vorliegt, wodurch eine Verringerung der Betriebstemperatur im Verzinkungsprozess ermöglicht wird.

Nachteilig ist bei allen bekannten Feuerverzinkungsverfahren, dass das Trage- und/oder Haltemittel gemeinsam, insbesondere zwangsläufig, vollständig und/oder teilweise - zumindest in Teilen - mit dem Bauteil verzinkt wird, wobei an dem Trage- und/oder Haltemittel auch Zink haften bleibt. Beim sogenannten Stückverzinken werden als Trage- und/oder Haltemittel insbesondere Warenträger, Traversen und/oder Ketten genutzt, welche die Bauteile zu den einzelnen Bädern bewegen und diese in die Bäder eintauchen. Zusätzlich ist es auch bekannt, Drähte bzw. Anbindedrähte zur Aufhängung der Bauteile zu nutzen, wobei Art und Anzahl der verwendeten Drähte je nach Form und/oder Gewicht des Bauteils variieren können. Bei einer Serienproduktion bzw. Serienstückverzinkung ist es auch üblich, Haken oder speziell auf das Verzinkungsgut angepasste Gestelle zu nutzen.

Meist sind die Trage- und/oder Haltemittel für eine Mehrfachanwendung ausgelegt, wobei die Trage- und/oder Haltemittel nach dem Verzinken behandelt werden müssen, so dass sich die Zinkschicht ablöst. Üblich ist beispielsweise eine Beizbehandlung, so dass die Trage- und/oder Haltemittel wieder verwendet werden können. Drahte bzw. Anbindedrähte werden in der Regel nur einmalig verwendet. Diese werden entsprechend nach dem Verzinkungsprozess von der Traverse abgetrennt und einem Stahlrecycling zugeführt.

Besonders nachteilig ist hierbei, dass unnötigerweise Zink beim unerwünschten Verzinken der Trage- und/oder Haltemittel verbraucht wird. Dies geht mit einem hohen wirtschaftlichen Verlust bei einem hohen Verzinkungsdurchsatz einher. So werden beispielsweise bis zu 90 % des Trage- und/oder Haltemittels (z. B. Draht) verzinkt. Bei einer üblichen Zinkschichtdicke von 80 $\mu$m resultiert ein Zinkverbrauch von etwa 10 t Zink je 100 t verwendeten Trage- und/oder Haltemittel, insbesondere Draht.

Bei dem Recycling des Zinks bzw. bei der Beizbehandlung der Trage- und/oder Haltemittel nach dem Verzinkungsprozess wird das Zink meist auch aus der angereicherten Abbeize wiedergewonnen, jedoch werden auch hierfür erhöhte Betriebskosten benötigt, welche die Kosten für die Wiederaufbereitung des Zinks egalisieren oder sogar übersteigen können.

Mit der Verzinkung der Trage- und/oder Haltemittel entsteht nicht nur ein hoher wirtschaftlicher Aufwand für den Verzinkungsbetrieb in Folge des unnötigen Zinkverbrauchs, sondern es kann auch zu Verlötungsstellen bzw. zu einer unerwünschten Verlötung ("Verbacken") und/oder einer unerwünschten festen Verbindung zwischen dem Bauteil und dem Trage- und/oder Haltemittel kommen, die dann zu einem erhöhten Arbeitsaufwand führt. Dieser liegt darin begründet, dass bei einem Entfernen des Trage- und/oder Haltemittels von dem Bauteil, sofern das Trage- und/oder Haltemittel fest mit dem Bauteil verbunden ist, eine Beschädigung der Zinkschicht des Bauteils in Kauf genommen wird, wobei die Beschädigung dann aufwendig repariert bzw. ausgebessert werden muss. Die Nachbehandlung der Bauteile, welche das Abnehmen der Trage- und/oder Haltemittel sowohl von der Traverse als auch vom Bauteil umfasst, ist demzufolge bei einer Verlötung sehr hoch. In Abhängigkeit von dem eingesetztem Bauteil und der Anzahl der Bauteile ergeben sich somit sowohl hohe Kosten als auch ein hoher Arbeitsaufwand. Auch die Qualität der Verzinkung wird durch eine Zinkanhaftung an dem Trage- und/oder Haltemittel verschlechtert.

Darüber hinaus ist auch unter Umweltaspekten eine Verzinkung des Trage- und/oder Haltemittels nachteilig, da zum einen unnötig der Rohstoff Zink verbraucht wird, was einhergeht mit der Notwendigkeit einer erhöhten Zinkproduktion. Zum anderen lasst es sich in der Praxis bei der Wiederverwendung der Trage- und/oder Haltemittel, trotz einer möglichst sauberen Entfernung der Zinkschicht nicht vermeiden, dass Zinkreste an Trage- und/oder Haltemittel verbleiben und es hierdurch zu einer Verschleppung in die Vorbehandlungsbäder des Verzinkungsprozesses kommt. Hierdurch wird die Reinhaltung dieser Bäder und damit die saubere Kreislaufführung der entsprechenden Medien negativ beeinflusst.

Die DE 101 24 468 A1 betrifft eine hakenförmige Aufnahmevorrichtung für Verzinkungsgut zum Einsatz bei herkömmlichen Beschichtungsverfahren wie Feuerverzinkung, Galvanisieren oder Lackieren. Auf der hakenförmige Aufnahmevorrichtung ist bereichsweise eine säurefeste, hitzebeständige und nicht metallisierbare Beschichtung wie Emaille vorgesehen.

Weiterhin betrifft die DE 37 20 965 A1 ein Feuerverzinkungsverfahren, wobei der Verzinkungsprozess automatisch mittels einer um ihre Längsachse rotierenden, angetriebenen Verzinkungsmaschine erfolgt. Die Verzinkungsmaschine wird zumindest teilweise in das Zinkbad eingetaucht. Die Verzinkungsmaschine ist mit Haltevorrichtungen für das Verzinkungsgut ausgestattet, wobei Teile der Verzinkungsmaschine mit zinkabweisenden Materialien wie Keramik beschichtet sind.

Das der vorliegenden Erfindung zugrunde liegende Problem besteht daher in der Bereitstellung eines Verfahrens zur Feuerverzinkung (Schmelztauchverzinkung), insbesondere von eisenbasierten bzw. eisenhaltigen Bauteilen, vorzugsweise stahlbasierten bzw. stahlhaltigen Bauteilen (Stahlbauteilen), sowie einer betreffenden Anlage zur Durchführung dieses Verfahrens und darüber hinaus eines im Rahmen des Verfahren einsetzbaren Trage- und/oder Haltemittels, wobei die zuvor geschilderten Nachteile des Standes der Technik zumindest weitestgehend vermieden oder aber wenigstens abgeschwächt werden sollen.

Insbesondere soll ein solches Feuerverzinkungsverfahren bzw. eine solche Feuerverzinkungsanlage bzw. ein solches Trage- und/oder Haltemittel bereitgestellt werden, welche(s) gegenüber herkömmlichen Feuerverzinkungsverfahren bzw. -anlagen bzw. herkömmlichen Trage- und/oder Haltemitteln eine verbesserte Prozessökonomie und/oder einen effizienteren, insbesondere flexibleren und/oder zuverlässigeren, insbesondere weniger fehleranfälligen Prozessablauf und/oder eine verbesserte ökologische Kompatibilität ermöglicht/ermöglichen. Insbesondere soll ein solches Verfahren bzw. eine solche Anlage bzw. ein solches in einem derartigen Verfahren bzw. in einer derartigen Anlage einsetzbares Trage- und/oder Haltemittel zu einer Reduzierung der verwendeten Zinkmenge und damit zu einer verbesserten ökologischen Kompatibilität und/oder einer verbesserten Prozessökonomie führen, aber dennoch zuverlässig gewährleisten, dass eine effiziente und fehlerfreie Verzinkung der zu verzinkenden Bauteile erfolgt. Insbesondere soll ein solches Verfahren bzw. eine solche Anlage bzw. ein solches Trage- und/oder Haltemittel eine Verlötung zwischen dem Trage- und/oder Haltemittel und dem Bauteil vermeiden bzw. verringern und somit insbesondere eine Nachbearbeitung reduzieren bzw. vermeiden.

Zur Lösung des zuvor geschilderten Problems schlägt die vorliegende Erfindung - gemäß einem **ersten** Aspekt der vorliegenden Erfindung - ein Verfahren zur Feuerverzinkung (Feuerverzinkungsverfahren) gemäß Anspruch 1 vor; weitere, insbesondere besondere und/oder vorteilhafte Ausgestaltungen des erfindungsgemäßen Feuerverzinkungsverfahrens sind Gegenstand der diesbezüglichen Feuerverzinkungsverfahrensunteransprüche.

Weiterhin betrifft die vorliegende Erfindung - gemäß einem **zweiten** Aspekt der vorliegenden Erfindung nach Anspruch 8 - ein Verfahren zur Beschichtung (Beschichtungsverfahren) eines Trage- und/oder Haltemittels, welches zur Verwendung innerhalb eines Feuerverzinkungsverfahrens vorgesehen ist, gemäß dem diesbezüglichen unabhängigen Beschichtungsverfahrensanspruch; weitere, insbesondere besondere und/oder vorteilhafte Ausgestaltung des erfindungsgemäßen Beschichtungsverfahrens sind Gegenstand der diesbezüglichen Beschichtungsverfahrensunteransprüche.

Des Weiteren betrifft die vorliegende Erfindung - gemäß einem **dritten** Aspekt der vorliegenden Erfindung nach Anspruch 15 - ein Trage- und/oder Haltemittel gemäß dem unabhängigen Trage- und/oder Haltemittelanspruch.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder einzelfallbedingt - von den nachfolgend angeführten Bereichsangaben erforderlichenfalls abweichen kann, ohne dass er den Rahmen der vorliegenden Erfindung verlässt. Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten Aspekt** der vorliegenden Erfindung - ist somit ein Verfahren zur Feuerverzinkung eines Bauteils,

wobei das Bauteil mittels eines Trage- und/oder Haltemittels in einen mit einer Zinkschmelze befüllten Verzinkungskessel getaucht wird, wobei das Trage- und/oder Haltemittel zumindest im Wesentlichen gemeinsam mit dem Bauteil zumindest bereichsweise in die Zinkschmelze eingetaucht und nach Abschluss des Feuerverzinkungsvorgangs wieder ausgetaucht wird,

wobei das Trage- und/oder Haltemittel zumindest bereichsweise mit einer verzinkungsresistenten und/oder verzinkungsinerten Beschichtung versehen ist,

wobei die verzinkungsresistente und/oder verzinkungsinerte Beschichtung mindestens eine Silicium/Sauerstoff-Verbindung umfasst oder hieraus gebildet ist und

wobei die Beschichtung des Trage- und/oder Haltemittels durch Temperaturbehandlung eines polysiloxanhaltigen Ausgangsmaterials erhältlich ist.

Wie nachfolgend ausgeführt, ist die vorliegende Erfindung mit einer Vielzahl von vollkommen unerwarteten Vorteilen, Besonderheiten und überraschenden technischen Effekten verbunden, wobei deren nachfolgende Schilderung keinerlei Anspruch auf Vollständigkeit erhebt, aber den erfinderischen Charakter der vorliegenden Erfindung veranschaulicht:

Überraschenderweise gelingt es im Rahmen der vorliegenden Erfindung, ein Trage- und/oder Haltemittel im Rahmen der Feuerverzinkung zum Einsatz zu bringen, welches selbst bei der durchzuführenden Feuerverzinkung zumindest im Wesentlichen frei von Zinkanhaftungen bleibt, und zwar ohne dass die Qualität der resultierenden Verzinkungsschicht auf dem Bauteil beeinträchtigt wird.

Ganz im Gegenteil resultieren im Rahmen der vorliegenden Erfindung von Fehlstellen vollkommen freie Feuerverzinkungsschichten auf den Bauteilen, welche über ausgezeichnete Korrosionsschutzeigenschaften und im Allgemeinen auch über exzellente mechanische und anderweitige Eigenschaften (z. B. optische Eigenschaften, wie Glanz etc.) verfügen.

Erfindungsgemäß werden im Vergleich zu einem unbeschichteten bzw. herkömmlichen Trage- und/oder Haltemittel mindestens 50 % weniger Zinkanhaftungen auf dem Trage- und/oder Haltemittel, welches mit der erfindungsgemäßen Beschichtung versehen worden ist, insbesondere weniger als 60 %, bevorzugt weniger als 70 %, besonders bevorzugt weniger als 80 % und ganz besonders bevorzugt weniger als 90 % und vorzugsweise eine zumindest im Wesentlichen eine von Zinkanhaftungen freie Oberfläche des Trage- und/oder Haltemittels, erreicht. Dadurch, dass weniger Zinkanhaftungen auf der Oberfläche des Trage- und/oder Haltemittels vorhanden sind, erfolgt vorteilhafterweise eine hohe Kosteneinsparung, da die Betriebskosten aufgrund der geringeren zur Feuerverzinkung der Bauteile benötigten Zinkmenge deutlich gesenkt werden können.

Nicht nur im Hinblick auf die Betriebskosten ist das verzinkungsresistente und/oder verzinkungsinerte Trage- und/oder Haltemittel besonders vorteilhaft, sondern auch im Hinblick von Umweltaspekten ergibt sich ein positiver Effekt aus der verzinkungsinerten Beschichtung des Trage- und/oder Haltemittels. Die ökologische Kompatibilität wird dadurch erhöht, dass während der Feuerverzinkung der Bauteile die Ressource Zink im Vergleich zum Stand der Technik, insbesondere um bis zu 20 %, eingespart werden kann, da ein überflüssiges Verzinken des Trage- und/oder Haltemittels weitestgehend vermieden werden kann. Darüber hinaus kann vorzugsweise auch eine nachträgliche Rückgewinnung des Zinks, welches an dem Trage- und/oder Haltemittel nach der Feuerverzinkung anhaftet, entfallen, so dass eine Aufbereitung sowohl der Abbeize, als auch des Trage- und/oder Haltemittels vermieden werden kann.

Wie nachfolgend ausgeführt, ist eine Besonderheit der vorliegenden Erfindung in diesem Zusammenhang darin zu sehen, dass das erfindungsgemäß verwendete Trage- und/oder Haltemittel, insbesondere Drähte und/oder Gestellkonstruktionen, eine verzinkungsresistente und/oder verzinkungsinerte Beschichtung aufweisen, wobei die verzinkungsresistente und/oder verzinkungsinerte Beschichtung mindestens eine insbesondere polymere Silicium/Sauerstoff-Verbindung umfasst oder hieraus gebildet ist.

In Kombination mit der im Stand der Technik üblichen Feuerverzinkung von Bauteilen kann die Effizienz des erfindungsgemäßen Verfahrens weiterführend verbessert werden: Wie nachfolgend im Detail ausgeführt, kann die Nachbearbeitung der Bauteile deutlich reduziert werden, vorzugsweise im Vergleich zum Stand der Technik um bis zu 80 %. Die Prozesseffizienz kann durch die entfallende Aufbereitung des Trage- und/oder Haltemittels deutlich gesteigert werden, da eine nachträgliche Aufbereitung des an dem Trage- und/oder Haltemittel anhaftenden Zinks weitestgehend vermieden werden kann.

Folglich ist die vorliegende Erfindung, insbesondere aufgrund ihrer verbesserten ökologischen Kompatibilität, auch in ökologisch sensitiven Bereichen einsetzbar, da durch die inerte bzw. verzinkungsinerte Oberfläche des Trageund/oder Haltemittels, insbesondere des Drahtes, eine Aufbereitung des Zinks bzw. der Abbeize, in denen das Trageund/oder Haltemittel derzeit in der Praxis nach der Feuerverzinkung getaucht wird, vermieden wird.

Insbesondere kann im Rahmen der vorliegenden Erfindung eine Umformbarkeit des Trage- und/oder Haltemittels vorteilhafterweise gewährleistet werden, da die Beschichtung des Trage- und/oder Haltemittels bei einer Umformung nicht abplatzt bzw. beschädigt wird.

Zudem hat sich nunmehr überraschend gezeigt, dass die Oberfläche des Trage- und/oder Haltemittels eine hohe Chemikalienbeständigkeit aufweist. Dies ist insbesondere deswegen vorteilhaft, da das Trage- und/oder Haltemittel vorteilhafterweise vor dem Eintauchen in das Verzinkungsbad gemeinsam mit dem Bauteil auch die Oberflächenvorbehandlungsschritte des Bauteils durchläuft. Die Chemikalienbeständigkeit reicht dabei von der Beständigkeit gegen alkalische bis zu säurehaltige Bäder. Vorzugsweise kann durch das Trage- und/oder Haltemittel das Bauteil die einzelnen Verfahrensschritte des Feuerverzinkungsverfahrens durchlaufen, ohne dass es von dem Trage- und/oder Haltemittel beeinträchtigt wird und/oder die Zinkschicht auf der Bauteiloberfläche negativ von dem Trage- und/oder Haltemittel beeinflusst wird.

Des Weiteren hat sich gezeigt, dass die Oberflächenbeschaffenheit des feuerverzinkten Bauteils deutlich verbessert werden kann, da eine Verlötung zwischen dem Bauteil und dem Trage- und/oder Haltemittel zumindest weitestgehend vermieden werden kann, so dass die Zinkschicht auf der Oberfläche des Bauteils weder beschädigt noch verletzt wird. Sofern ein Draht als Trage- und/oder Haltemittel verwendet wird, kann das sogenannte "Abdrahten", d. h. das Ablösen des Bauteils von dem Trage- und/oder Haltemittel, ohne eine Beschädigung der Zinkschicht erreicht werden.

Im Rahmen der vorliegenden Erfindung kann somit ein effizient arbeitendes und ökologisches kompatibles Feuerverzinkungsverfahren bzw. eine entsprechende Anlage bzw. ein entsprechendes Trage- und/oder Haltemittel bereitgestellt werden, wobei die vorstehend geschilderten Nachteile des Standes der Technik zumindest weitestgehend vermieden oder zumindest abgeschwächt werden können.

Nachfolgend werden bevorzugte Ausgestaltungen des erfindungsgemäßen Feuerverzinkungsverfahrens bzw. des erfindungsgemäßen Feuerverzinkungsverfahrensablaufs näher beschrieben und erläutert:

Gemäß einer ganz besonders bevorzugten Ausführungsform weist der die Beschichtung aufweisende Bereich der Oberfläche des Trage- und/oder Haltemittels nach Abschluss des Feuerverzinkungsvorgangs und/oder nach Austauchen aus dem mit der Zinkschmelze befüllten Verzinkungskessel, insbesondere aus dem schmelzflüssigen Verzinkungsbad, zumindest im Wesentlichen keine Zinkanhaftungen auf. Die Beschichtung des Trage- und/oder Haltemittels ist vorteilhafterweise auf den Bereichen des Trage- und/oder Haltemittels aufgebracht, die gemeinsam mit dem Bauteil in die flüssigheiße Zinkschmelze getaucht werden. Die verzinkungsresistente Beschichtung verhindert ein Anhaften des Zinks. Wie zuvor erläutert, ist vorteilhafterweise der mit der Beschichtung versehene Bereich des Trage- und/oder Haltemittels nach dem Feuerverzinkungsverfahren zumindest im Wesentlichen vollkommen frei von Zinkanhaftungen. Im Vergleich zum Stand der Technik werden mindestens 50 % weniger Zinkanhaftungen, insbesondere 60 %, bevorzugt 70 %, besonders bevorzugt 80 % und ganz besonders bevorzugt 90 %, weniger Zinkanhaftungen auf der Oberfläche des Trage- und/oder Haltemittels erreicht. Mittels der deutlich reduzierten Zinkanhaftung wird eine drastische Einsparung der für die Feuerverzinkung des Bauteils benötigten Zinkmenge gewährleistet.

Bei einer weiteren vorteilhaften Ausführungsform des Feuerverzinkungsverfahrens ist das Trage- und/oder Haltemittel als Befestigungs- und/oder Anschlagmittel ausgebildet. Das Trage- und/oder Haltemittel ist vorzugsweise derart ausgeführt, dass es das Bauteil sowohl an sich befestigt bzw. dieses fixiert, während das Bauteil durch die einzelnen Verfahrensschritte des Feuerverzinkungsverfahrens geführt wird. Insbesondere wird das Trage- und/oder Haltemittel zumindest bereichsweise gemeinsam mit dem Bauteil in die flüssigheiße Zinkschmelze getaucht, so dass sowohl das Trage- und/oder Haltemittel als auch das Bauteil mit der Zinkschmelze benetzt werden. Durch die verzinkungsresistente und/oder verzinkungsinerte Beschichtung des Trage- und/oder Haltemittels bleibt das Zink nach Austauchen aus dem Verzinkungsbad nicht an der Oberfläche des Trage- und/oder Haltemittels haften.

Vorteilhafterweise ist das Trage- und/oder Haltemittel als Draht bzw. Anbindedraht ausgebildet, wobei es einen Durchmesser von 2 mm bis 3 mm aufweisen kann. Dieser Anbindedraht wird derart an das Bauteil befestigt, dass das Bauteil zuverlässig mittels des Anbindedrahtes fixiert ist. Vorzugsweise wird eine Mehrzahl von Anbindedrähten bei einem größeren bzw. komplex geformten Bauteil verwendet, so dass die gesamte Gewichtskraft des Bauteils nicht auf einem einzigen Draht lastet. Eine Mehrzahl von Anbindedrähten ermöglicht darüber hinaus auch eine bestimmte Ausrichtung des Bauteils in dem Verzinkungsbad bzw. während des Feuerverzinkungsverfahrens. Je nach Bauteil und/oder Verfahrensablauf wird ein entsprechendes Trage- und/oder Haltemittel verwendet: So ist z. B. auch ein Haken, ein Gestell, eine Auflage und/oder eine Traverse oder dergleichen als Trage- und/oder Haltemittel denkbar. Beispielsweise können innerhalb bzw. mittels eines Gestells eine Mehrzahl von Bauteilen feuerverzinkt werden. Bei einem Haken kann dieser möglichst einfach von dem Bauteil entfernt werden, insbesondere wobei ein manueller Eingriff des Verzinkers weitestgehend vermieden werden kann.

Vorteilhafterweise ist die Beschichtung mit einer Auftragsmenge, berechnet als Flächengewicht der Beschichtung, im Bereich von 0,1 bis 150 g/m$^2$, bevorzugt von 0,3 bis 100 g/m$^2$, besonders bevorzugt von 0,5 bis 50 g/m$^2$, auf das Trage- und/oder Haltemittel aufgebracht. Die vorgenannten Auftragsmengen sind so ausgewählt, dass eine möglichst dünne Beschichtung des Trage- und/oder Haltemittels erfolgt, welche die Anforderung an die Beschichtung zumindest im Wesentlichen realisieren. Der Materialeinsatz der Beschichtung ist sowohl aus Gründen der ökologischen Kompatibilität als auch im Hinblick auf die Betriebskosten möglichst gering zu halten, was mit den vorgenannten Auftragsmengen gelingt.

Weiterhin ist die Beschichtung mit einer Schichtdicke im Bereich von 1 bis 1000 $\mu$m, insbesondere im Bereich von 2 bis 750 $\mu$m, vorzugsweise im Bereich von 3 bis 500 $\mu$m, bevorzugt im Bereich von 5 bis 250 $\mu$m, weiter bevorzugt im Bereich von 5 bis 200 $\mu$m, noch mehr bevorzugt im Bereich von 10 bis 100 $\mu$m, ganz besonders bevorzugt im Bereich von 25 bis 95 $\mu$m, auf die Oberfläche des Trage- und/oder Haltemittels, zumindest bereichsweise, aufgebracht. Insbesondere ist die Schichtdicke in Abhängigkeit des durchzuführenden Feuerverzinkungsprozesses und der dafür vorgesehenen Anlage, d. h. also anlagen- und prozessspezifisch, zu wählen, insbesondere wobei bei einem möglichst geringen Aufwand ein verringerter Materialeinsatz angestrebt wird.

Gemäß einer besonderen Ausführungsform bildet die Beschichtung eine festhaftende und/oder trockene und/oder temperaturresistente und/oder chemikalienresistente Oberfläche auf dem Trage- und/oder Haltemittel aus. Vorzugsweise ist die Beschichtung zumindest im Wesentlichen bis Temperaturen von mindestens bis zu 460 °C temperaturresistent. Demzufolge hält die Beschichtung des Trage- und/oder Haltemittels auch der Temperaturbelastung in dem flüssigheißen Zinkbad, welches insbesondere eine Temperatur im Bereich von 450 °C bis 490 °C aufweisen kann, stand. Bevorzugt erfolgt kein Übertrag der Beschichtung auf das Verzinkungsgut und/oder sonstiges Material, insbesondere vor, während oder nach dem Feuerverzinkungsverfahren. Eine ungewollte Kontamination des Zinkbads, d h. also eine Verunreinigung des Zinkbads und/oder weiterer Bäder wird weitestgehend vermieden, so dass die nachteiligen Auswirkungen einer Kontamination, insbesondere in deren Folge Fehlverzinkungen verursacht werden können, vermieden wird. Die Temperaturbeständigkeit der Beschichtung ist auch für den Vorbehandlungsprozess des Bauteils wichtig, da das Bauteil bei etwa 80 °C einer, insbesondere alkalischen, Entfettung und/oder einem Flussmittel ausgesetzt sein kann und vorzugsweise innerhalb eines Trockenofens bei etwa 200 °C getrocknet wird. Insbesondere reicht die Anforderung an die Chemikalienbeständigkeit über die gesamte pH-Wert-Breite. Bei einer alkalischen Entfettung sind insbesondere pH-Werte von 13 vorhanden, bei der sauren Entfettung jedoch pH-Werte unter 1; dies gilt ebenfalls für die Beize. Die Beschichtung ist demzufolge nicht nur gegen die Zinkschmelze inert, d h. verzinkungsresistent und/oder verzinkungsinert, sondern vorteilhafterweise auch gegen die bei der Vorbehandlung bzw. in dem Feuerverzinkungsverfahren verwendeten Chemikalien.

Erfindungsgemäß ist vorgesehen, dass die Beschichtung des Trage- und/oder Haltemittels durch Temperaturbehandlung eines polysiloxanhaltigen Ausgangsmaterials erhalten bzw. erhältlich ist. Vorteilhafterweise erfolgt während der Temperaturbehandlung eine Härtung oder ein Einbrennen der Beschichtung, insbesondere des polyorganosiloxanhaltigen Ausgangsmaterials. Vorzugsweise wird als Beschichtung ein Silikonharzlack verwendet und insbesondere in einer oxidierenden und/oder sauerstoffhaltigen Atmosphäre der Temperaturbehandlung ausgesetzt. Insbesondere ist die Temperatur während des Einbrennvorgangs im Bereich von 150 °C bis 800 °C vorgesehen, vorzugsweise erfolgt die Temperaturbehandlung bei einer Temperatur von mindestens 160 °C, bevorzugt bei einer Temperatur von mindestens 250 °C. Das Trage- und/oder Haltemittel wird der Temperaturbehandlung vorteilhafterweise für eine Zeitdauer im Bereich von 5 bis 500 Minuten, vorzugsweise für mindestens 30 Minuten, weiter bevorzugt für mindestens 45 Minuten, ausgesetzt.

Vor bzw. zu Beginn der Modifizierungsreaktion brauchen die eingesetzten Silikonharzvorprodukte sowie die organischen Komponenten, wie z. B. Polyole, nicht zwingend miteinander kompatibel zu sein. Denn vorteilhafterweise wird durch die chemische Umsetzung eine Verträglichkeit oder Kompatibilität bzw. eine Homogenität beider Komponenten erreicht, insbesondere wobei nach Erreichen des gewünschten Molekulargewichtes des Silikonkombinationsharzes die chemische Umsetzung beendet wird. Zur vollständigen Aushärtung bzw. zum vollständigen Einbrennen der Beschichtung ist eine Einbrenntemperatur von mindestens 150 °C erforderlich. Bei Temperaturen oberhalb von 350 °C verbrennen insbesondere die organischen Bestandteile des Harzes nahezu vollständig, wodurch Sintervorgänge unterstützt werden, so dass sich anorganische Verbundsysteme, welche sowohl hart als auch chemisch absolut beständig, vorzugsweise inert, sind, ausbilden. Letztlich werden durch den Einbrennvorgang die über das Siloxangerüst der Beschichtung fest auf dem Trage- und/oder Haltemittel haftenden Überzüge dauerhaft fixiert und in die Oberfläche eingebrannt.

Ergänzend oder alternativ ist es bei einer ganz besonderen Ausführungsform vorgesehen, dass die Beschichtung des Trage- und/oder Haltemittels in die Oberfläche des Trage- und/oder Haltemittels eingebrannt ist. Das Einbrennen der Beschichtung erfolgt insbesondere durch eine Temperaturbehandlung, insbesondere Härtung oder ein Einbrennen eines polysiloxanhaltigen Ausgangsmaterials, vorteilhafterweise eines polyorganosiloxanhaltigen Ausgangsmaterials. Vorzugsweise wird als Ausgangsmaterial ein Silikonharzlack verwendet. Das Einbrennen der Beschichtung erfolgt insbesondere in einer oxidierenden und/oder sauerstoffhaltigen Atmosphäre, insbesondere wobei die Temperatur im Bereich von 150 °C bis 800 °C, vorzugsweise bei einer Temperatur von mindestens 160 °C, bevorzugt bei einer Temperatur von mindestens 250 °C, gewählt sein kann. Vorzugsweise beträgt die Zeitdauer dieser Temperaturbehandlung bzw. des Einbrennens von 5 bis 500 Minuten, vorzugsweise für mindestens 30 Minuten, weiter bevorzugt für mindestens 45 Minuten.

Vorteilhafterweise erfolgt durch die Zersetzung des Silikonharzes eine Bildung einer deckenden Siliciumdioxidschicht ($SiO_2$-Schicht), welche insbesondere die mit der Beschichtung versehene Oberfläche des Trage- und/oder Haltemittels bedeckt. Vorzugsweise zersetzt sich das Silikonharz beim Einbrennen zwischen 250 °C bis 600 °C unter Bildung von (Poly-)Kieselsäure bzw. Siliciumdioxid, insbesondere wobei durch das Einbrennen ein beständiger sowie korrosionsschützender Oberflächenfilm auf dem Trage- und/oder Haltemittel gebildet wird. Aufgrund des Einbrennens der Beschichtung in die Oberfläche des Trage- und/oder Haltemittels wird das Ausgangssilikonharz auch den sogenannten Einbrennharzen zugeordnet.

Bei der Temperaturbehandlung des Trage- und/oder Haltemittels bilden sich insbesondere Siliciumoxide, Silikate, Polykieselsäuren und/oder Polysiloxane, insbesondere Polyorganosiloxane, sowie deren Mischungen oder Kombinationen. Die Einbrennbedingungen (insbesondere Dauern und/oder Temperaturen) der Beschichtung sind derart zu wählen, dass sich eine verzinkungsresistente und/oder verzinkungsinerte Oberfläche auf den beschichteten Bereich des Trage- und/oder Haltemittels ausbildet. Insbesondere wenn die Beschichtung unzureichend eingebrannt ist, kann die resultierende $SiO_2$-Schicht unter Umständen nicht zufriedenstellend auf der beschichteten Oberfläche des Trage- und/oder Haltemittels ausgebildet sein. Wenn jedoch die Beschichtung bei allzu hohen Temperaturen und/oder für einen allzu langen Zeitraum in die Oberfläche des Trage- und/oder Haltemittels eingebrannt wird, so verdampft ein großer Teil des aufgetragenen Silikonharzes, so dass dann das Trage- und/oder Haltemittel nicht mehr vollständig mit einer im beschichteten Bereich vorgesehenen deckenden $SiO_2$-Schicht beschichtet sein kann.

Darüber hinaus ist es gemäß einer besonders bevorzugten Ausführungsform vorgesehen, dass das polysiloxanhaltige Ausgangsmaterial, insbesondere das polyorganosiloxanhaltige Ausgangsmaterial, ausgewählt ist aus der Gruppe von Polysiloxanen. Die Gruppe der Polysiloxane, die für das Ausgangsmaterial verwendet werden, umfasst insbesondere die Polyorganosiloxane, vorzugsweise die Polyalkylsiloxane, die Polyarylsiloxane, die Polyarylalkylsiloxane, die Polyorganosilalkylene und/oder die Polysilarylensiloxane sowie deren Mischungen und Kombinationen.

Ein hoher Gehalt z. B. an Phenyl- und/oder Methylgruppen gewährleistet insbesondere eine herausragende Hitzebeständigkeit, insbesondere wobei ein hoher Gehalt an Phenylgruppen eine gute Verträglichkeit mit anderen organischen Harzen sowie eine erhöhte bzw. verbesserte Elastizität gewährleisten kann. Das Grundgerüst des Ausgangsmaterials wird durch Silicium/Sauerstoff-Verbindungen gestellt, insbesondere wobei die organischen Reste, beispielsweise Alkyl- und/oder Arylgruppen, vorzugsweise an die Siliciumatome gebunden sind. Die häufigsten Substituenten für die Silicium/Sauerstoff-Verbindungen sind dabei Methyl- und/oder Phenylgruppen. Eine geeignete Wahl des Ausgangsmaterials ermöglicht die positiven Eigenschaften, insbesondere des Silikonharzes, welche in einer hohen Temperaturbeständigkeit, einer hohen Bewitterungsbeständigkeit sowie einer niedrigen Oberflächenspannung zu sehen sind. Silikonharze weisen insbesondere thermoplastische Eigenschaften auf.

Bei einer besonders bevorzugten Ausführungsform kann das Ausgangsmaterial, insbesondere das Silikonharz, kombiniert werden mit wenigstens einem weiteren organischen Harz. Durch eine geeignete Wahl des so entstehenden Silikonkombinationsharzes oder des modifizierten Silikonharzes werden weitere positive Eigenschaften hervorgerufen, welche insbesondere in einer niedrigen Thermoplastizität, einer hohen Elastizität und/oder einer guten Pigmentbenetzung zu sehen sind. Das von dem Ausgangsmaterial verschiedene organische Harz kann dabei insbesondere ausgewählt sein aus der Gruppe von Alkyd-, Epoxid-, Melamin-, Phenol- und/oder Polyesterharzen sowie deren Mischungen oder Kombinationen.

Im Übrigen ist es bei einer ganz besonderen Ausführungsform vorgesehen, dass die Beschichtung mit einem insbesondere metallischen und/oder mineralischer (anorganischer) Zusatzstoff versehen ist und/oder diesen enthält. Der Zusatzstoff bzw. das Additiv kann zur Verbesserung der Hitzebeständigkeit des Ausgangsmaterials genutzt werden. Zusätzlich kann der Zusatzstoff bzw. das Additiv (z. B. metallische und/oder mineralische (anorganische) Pigmente) zu einer Verbesserung der Chemikalienbeständigkeit beitragen. Als Zusatzstoff bzw. Additiv eignet sich insbesondere eine anorganische Metallverbindung, vorzugsweise ein Metalloxid, wie $SiO_2$, $Al_2O_3$, MgO, $TiO_2$. Des Weiteren kann der Zusatzstoff bevorzugt aber auch ein Metallnitrid, wie $SiN_4$, ein Metallcarbonat, ein Metallcarbid, ein Metallsilikat und/oder ein Metallphosphat, wie z. B. Wolframcarbonat, $Ca_3(PO_4)_2$, $AlPO_4$ oder $CaSiO_3$ aufweisen oder dieses enthalten. Die vorgenannten mineralischen (anorganischen) Zusatzstoffe können dabei insbesondere ausgewählt sein aus der Gruppe von Magnesiumoxiden, Titanoxiden, Siliciumnitriden, Wolframcarbiden, Alkali- und Erdalkalicarbonaten, -phosphaten und -silikaten und Aluminiumphosphaten sowie deren Mischungen und Kombinationen. Vorzugsweise wird der metallische und/oder mineralische (anorganische) Zusatzstoff (Additiv) bezogen auf die Beschichtung in Mengen von bis zu 50 Gew.-% des Zusatzstoffes eingebracht bzw. ist in diesen Mengen vorhanden. Übermäßige Gewichtsanteile dagegen können eine gleichmäßige Beschichtung unter Umständen erschweren, so dass sich infolgedessen das Silikonharz während der Feuerverzinkung ablösen könnte.

Gemäß einer weiteren, ganz besonders bevorzugten Ausführungsform ist es vorgesehen, dass die Beschichtung umformbar ausgebildet ist. Bevorzugt ist die Beschichtung nicht spröde und/oder flexibel ausgebildet, insbesondere derart, dass das Trage- und/oder Haltemittel, insbesondere nach dem Einbrennvorgang, verformbar, insbesondere aufwickelbar, ist. Insbesondere ist die vorgenannte Ausbildung der Beschichtung für Anbindedrähte bzw. Drähte vorteilhaft, die bei Anordnung an das Bauteil verformt werden bzw. um sich selbst gewickelt werden, insbesondere zu sogenannten Bünaein. Nach Abschluss des Verzinkungsvorgangs bzw. nach dem Austauchen aus dem Verzinkungsbad wird das Trage- und/oder Haltemittel, insbesondere der Anbindedraht, von dem Bauteil entfernt. Sofern dieses vorab aufgewickelt gewesen ist, so muss es insbesondere auch wieder entwickelt werden. Die vorgenannte umformbare Ausbildung der Beschichtung ermöglicht es, dass auch nach Umformung bzw. Verformung und/oder Verbiegens des Trage- und/oder Haltemittels dieses vorzugsweise erneut eingesetzt werden kann, ohne dass die Beschichtung beschädigt und/oder negativ beeinflusst wird. Demzufolge kann das Trage- und/oder Haltemittel vorteilhafterweise mehrfach verwendet werden, auch wenn es insbesondere sowohl beim Anbringen an das Bauteil als auch bei der Entfernung von dem Bauteil verformt und/oder verbogen wird.

Vorzugsweise umfasst das erfindungsgemäße Feuerverzinkungsverfahren die folgenden Verfahrensschritte, bevorzugt in der nachfolgend aufgeführten Reihenfolge:

(a) gegebenenfalls Entfettungsbehandlung, vorzugsweise alkalische Entfettungsbehandlung, des Bauteils, insbesondere in mindestens einem Entfettungsbad; dann

(b) gegebenenfalls Spülen des in Verfahrensschritt (a) entfetteten Bauteils, insbesondere in mindestens einem Spülbad; dann

(c) Beizbehandlung, vorzugsweise saure Beizbehandlung, des in Verfahrensschritt (a) entfetteten und gegebenenfalls in Verfahrensschritt (b) gespülten Bauteils, insbesondere in mindestens einem Beizbad; dann

(d) gegebenenfalls Spülen des in Verfahrensschritt (c) gebeizten Bauteils, insbesondere in mindestens einem Spülbad; dann

(e) Flussmittelbehandlung des in Verfahrensschritt (c) gebeizten und gegebenenfalls in Verfahrensschritt (d) gespülten Bauteils mittels einer Flussmittelzusammensetzung in einem Flussmittelbad; dann

(f) gegebenenfalls Trocknungsbehandlung des in Verfahrensschritt (e) der Flussmittelbehandlung unterzogenen Bauteils; dann

(g) Feuerverzinkung (Schmelztauchverzinkung) des in Verfahrensschritt (e) der Flussmittelbehandlung unterzogenen und gegebenenfalls in Verfahrensschritt (f) getrockneten Bauteils in einem mit einer Zinkschmelze befüllten Verzinkungskessel, insbesondere in einem schmelzflüssigen Verzinkungsbad.

Wie zuvor beschrieben, umfasst das erfindungsgemäße Verfahren die zuvor geschilderten Verfahrensschritte (a) bis (g). Die Verfahrensschritte (a) bis (d) können dabei grundsätzlich von dem Fachmann mit der an sich bekannten Art und Weise durchgeführt werden. Dies gilt grundsätzlich auch für die prinzipielle Durchführung der übrigen Verfahrensschritte, insbesondere auch im Hinblick auf den Verfahrensschritt (g) der Feuerverzinkung.

Dabei versteht es sich letztlich, dass gegebenenfalls weitere Vorbehandlungsschritte, wie ein Spülvorgang, eine Beizbehandlung, eine mechanische Reinigung und/oder eine Entfettungsbehandlung, durchgeführt werden können.

Was die erfindungsgemäß eingesetzte aluminiumhaltige, insbesondere aluminiumlegierte Zinkschmelze ("Zn/Al-Schmelze") und/oder das Verzinkungsbad anbelangt, so ist diesbezüglich Folgendes auszuführen:

Gemäß einer typischen Ausführungsform der vorliegenden Erfindung ist es von Vorteil, wenn die aluminiumhaltige, insbesondere aluminiumlegierte Zinkschmelze ("Zn/Al-Schmelze") und/oder das Verzinkungsbad, eine Menge an Aluminium im Bereich von 0,0001 bis 25 Gew.-%, insbesondere im Bereich von 0,001 bis 20 Gew.-%, vorzugsweise im Bereich von 0,005 bis 17,5 Gew.-%, bevorzugt im Bereich von 0,01 bis 15 Gew.-%, besonders bevorzugt im Bereich von 0,02 bis 12,5 Gew.-%, ganz besonders bevorzugt im Bereich von 0,05 bis 10 Gew.-%, noch mehr bevorzugt im Bereich von 0,1 bis 8 Gew.-%, aufweist, bezogen auf die aluminiumhaltige, insbesondere aluminiumlegierte, Zinkschmelze ("Zn/Al-Schmelze") und/oder das Verzinkungsbad. Insbesondere können dabei die aluminiumhaltige, insbesondere aluminiumlegierte, Zinkschmelze ("Zn/Al-Schmelze") und/oder das Verzinkungsbad bezogen auf die aluminiumhaltige, insbesondere aluminiumlegierte Zinkschmelze ("Zn/Al-Schmelze") und/oder das Verzinkungsbad, eine Menge an Zink von mindestens 75 Gew.-%, insbesondere mindestens 80 Gew.-%, vorzugsweise mindestens 85 Gew.-%, bevorzugt mindestens 90 Gew.-%, sowie gegebenenfalls mindestens ein weiteres Metall, insbesondere in Mengen von bis zu 5 Gew.-% und/oder insbesondere ausgewählt aus der Gruppe von Bismut (Bi), Blei (Pb), Zinn (Sn), Nickel (Ni), Silicium (Si), Magnesium (Mg) und deren Kombinationen, aufweisen. Dabei sind alle vorstehend genannten Mengenangaben derart auszuwählen, dass insgesamt 100 Gew.-% resultieren.

Weiterhin ist es erfindungsgemäß bevorzugt, wenn die aluminiumhaltige, insbesondere aluminiumlegierte Zinkschmelze ("Zn/Al-Schmelze") und/oder das Verzinkungsbad die folgende Zusammensetzung aufweist, wobei alle nachfolgend genannten Mengenangaben auf die aluminiumhaltige, insbesondere aluminiumlegierte, Zinkschmelze ("Zn/Al-Schmelze") und/oder das Verzinkungsbad bezogen sind und derart auszuwählen sind, dass insgesamt 100 Gew.-% resultieren; und/oder wobei die Zinkschmelze, insbesondere das schmelzflüssige Verzinkungsbad, die folgende Zusammensetzung aufweist:

(i) Zink (Zn), insbesondere in Mengen im Bereich von 75 bis 99,9999 Gew.-%, insbesondere im Bereich von 80 bis 99,999 Gew.-%, vorzugsweise im Bereich von 82,5 bis 99,995 Gew.-%, bevorzugt im Bereich von 85 bis 99,99 Gew.-%, besonders bevorzugt im Bereich von 87,5 bis 99,98 Gew.-%, ganz besonders bevorzugt im Bereich von 90 bis 99,95 Gew.-%, noch mehr bevorzugt im Bereich von 92 bis 99,9 Gew.-%,

(ii) Aluminium (Al), insbesondere in Mengen im Bereich von 0,0001 bis 25 Gew.-%, insbesondere im Bereich von 0,001 bis 20 Gew.-%, vorzugsweise im Bereich von 0,005 bis 17,5 Gew.-%, bevorzugt im Bereich von 0,01 bis 15 Gew.-%, besonders bevorzugt im Bereich von 0,02 bis 12,5 Gew.-%, ganz besonders bevorzugt im Bereich von 0,05 bis 10 Gew.-%, noch mehr bevorzugt im Bereich von 0,1 bis 8 Gew.-%,

(iii) gegebenenfalls Bismut (Bi), insbesondere in Mengen von bis zu 0,5 Gew.-%, vorzugsweise in Mengen von bis zu 0,3 Gew.-%, bevorzugt in Mengen von bis zu 0,1 Gew.-%,

(iv) gegebenenfalls Blei (Pb), insbesondere in Mengen von bis zu 0,5 Gew.-%, vorzugsweise in Mengen von bis zu 0,2 Gew.-%, bevorzugt in Mengen von bis zu 0,1 Gew.-%,

(v) gegebenenfalls Zinn (Sn), insbesondere in Mengen von bis zu 0,9 Gew.-%, vorzugsweise in Mengen von bis zu 0,6 Gew.-%, bevorzugt in Mengen von bis zu 0,3 Gew.-%,

(vi) gegebenenfalls Nickel (Ni), insbesondere in Mengen von bis zu 0,1 Gew.-%, vorzugsweise in Mengen von bis zu 0,08 Gew.-%, bevorzugt in Mengen von bis zu 0,06 Gew.-%,

(vii) gegebenenfalls Silicium (Si), insbesondere in Mengen von bis zu 0,1 Gew.-%, vorzugsweise in Mengen von bis zu 0,05 Gew.-%, bevorzugt in Mengen von bis zu 0,01 Gew.-%,

(viii) gegebenenfalls Magnesium (Mg), insbesondere in Mengen von bis zu 5 Gew.-%, vorzugsweise in Mengen von bis zu 2,5 Gew.-%, bevorzugt in Mengen von bis zu 0,8 Gew.-%.

Wenn die eingesetzte Zinkschmelze außer Aluminium weitere Legierungsbestandteile bzw. Legierungsmetalle enthält, kann hierdurch die Verfahrensführung gezielt gesteuert werden: So kann durch die Anwesenheit insbesondere von Blei und Bismut die Oberflächenspannung reduziert und auf diese Weise die Benetzbarkeit der zu verzinkenden Oberfläche verbessert werden, während durch die Anwesenheit von Zinn die optischen Eigenschaften, insbesondere der Glanz, der resultierenden Verzinkungsschicht verbessert werden können. Durch Anwesenheit von Nickel lassen sich die Schichtdicken weiter reduzieren, durch die Anwesenheit von Silicium kann die Standzeit des Zinkbad-Behältnisses (z. B. Stahlkessel) verlängert werden und durch die Anwesenheit von Magnesium können die Korrosionseigenschaften, insbesondere die Korrosionsbeständigkeit, der resultierenden Verzinkungsschicht verbessert werden.

Gemäß einer besonderen Ausführungsform kann die aluminiumhaltige, insbesondere aluminiumlegierte, Zinkschmelze ("Zn/Al-Schmelze") und/oder das Verzinkungsbad eine Temperatur im Bereich von 375 °C bis 750 °C, insbesondere Temperatur im Bereich von 380 °C bis 700 °C, vorzugsweise Temperatur im Bereich von 390 °C bis 680 °C, noch mehr bevorzugt im Bereich von 395 °C bis 675 °C, aufweisen.

Typischerweise wird im Rahmen des Feuerverzinkungsschritts (g) derart vorgegangen, dass das Bauteil in die aluminiumhaltige, insbesondere aluminiumlegierte Zinkschmelze ("Zn/Al-Schmelze") und/oder in das Verzinkungsbad getaucht wird, insbesondere hierin getaucht und bewegt wird, insbesondere für eine Zeitdauer, welche ausreichend ist, um eine wirksame Feuerverzinkung (Schmelztauchverzinkung) zu gewährleisten, insbesondere für eine Zeitdauer im Bereich von 0,0001 bis 60 Minuten, vorzugsweise im Bereich von 0,001 bis 45 Minuten, bevorzugt im Bereich von 0,01 bis 30 Minuten, noch mehr bevorzugt im Bereich von 0,1 bis 15 Minuten.

Insbesondere kann die aluminiumhaltige, insbesondere aluminiumlegierte Zinkschmelze ("Zn/Al-Schmelze") und/oder das Verzinkungsbad mit mindestens einem Inertgas, insbesondere Stickstoff, kontaktiert und/oder gespült oder durchgeleitet werden.

Grundsätzlich kann das erfindungsgemäße Verfahren kontinuierlich oder diskontinuierlich betrieben werden.

Bei dem zu behandelnden Bauteil kann es sich um ein einzelnes Erzeugnis oder eine Vielzahl einzelner Erzeugnisse handeln. In diesem Fall wird eine diskontinuierliche Verfahrensweise bevorzugt, obwohl eine kontinuierliche Verfahrensweise grundsätzlich nicht ausgeschlossen ist.

Des Weiteren kann es sich bei dem Bauteil auch um ein Langprodukt, insbesondere ein Draht-, Rohr-, Blech-, Coil-Material oder dergleichen, handeln. In diesem Fall wird eine kontinuierliche Verfahrensweise bevorzugt, obwohl auch diesbezüglich eine diskontinuierliche Vorgehensweise nicht ausgeschlossen ist.

Gemäß einer besonderen Ausführungsform der vorliegenden Erfindung kann sich der in Verfahrensschritt (g) durchgeführten Feuerverzinkung (Schmelztauchverzinkung) ein Abkühlungsschritt (h) anschließen, insbesondere wobei das Bauteil einer Abkühlungsbehandlung (h) unterzogen werden kann, gegebenenfalls gefolgt von einem weiteren Nachbearbeitungs- und/oder Nachbehandlungsschritt (i).

Der optionale Abkühlungsschritt (h) und/oder die optionale Abkühlungsbehandlung (h) kann insbesondere mittels Luft und/oder in Gegenwart von Luft erfolgen, vorzugsweise erfolgt eine Abkühlung bis auf Umgebungstemperatur.

Weiterer Gegenstand der vorliegenden Erfindung - gemäß einem **zweiten Aspekt** der vorliegenden Erfindung - ist ein Verfahren zur Beschichtung eines Trage- und/oder Haltemittels zur Verwendung in einem Feuerverzinkungsverfahren,

wobei das Trage- und/oder Haltemittel zumindest bereichsweise mit einer verzinkungsresistenten und/oder verzinkungsinerten Beschichtung versehen wird, wobei - die verzinkungsresistente und/oder verzinkungsinerte Beschichtung mindestens eine Silicium/Sauerstoff-Verbindung umfasst oder hieraus gebildet ist und

wobei die Beschichtung des Trage- und/oder Haltemittels durch Temperaturbehandlung eines polysiloxanhaltigen Ausgangsmaterial erhalten wird.

Wie zuvor beschrieben, ist die verzinkungsresistente und/oder verzinkungsinerte Beschichtung des Trage- und/oder Haltemittels in vielfältiger Weise vorteilhaft, da durch die Beschichtung sowohl die für die Verzinkung des Bauteils notwendige Zinkmenge als auch die nach der Verzinkung benötigte Nacharbeit deutlich reduziert werden kann. Demzufolge ist der Prozessablauf effizient sowie ökologisch kompatibel, wobei mit dem Verfahren zur Beschichtung die geschilderten Nachteile des Standes der Technik zumindest weitestgehend vermieden oder aber zumindest abgeschwächt werden können.

Gemäß einer besonderen bevorzugten Ausführungsform ist das Trage- und/oder Haltemittel als Befestigungs- und/oder Anschlagmittel ausgebildet. Insbesondere ist das Trage- und/oder Haltemittel als Draht, auch Anbindedraht genannt, vorzugsweise mit einem Durchmesser von 2 mm bis 3 mm, ausgebildet. Des Weiteren kann das Trage- und/oder Haltemittel auch in Form eines Hakens, eines Gestells, einer Auflage und/oder als Traverse ausgeführt sein. Die Auswahl bzw. die Ausführungsform des Trage- und/oder Haltemittels richtet sich dabei insbesondere an den Ablauf des Feuerverzinkungsverfahrens sowie die Bauteilform und die Häufigkeit der durchzuführenden Feuerverzinkung mit einer zumindest im Wesentlichen ähnlichen Bauteilform. Sofern eine Auflage individuell auf ein Bauteil abgestimmt ist, so bietet sich dies insbesondere dann an, wenn diese Bauteilform möglichst häufig, vorzugsweise kontinuierlich, feuerverzinkt wird. Vorteil von einem Anbindedraht ist es, dass dieser in seiner verwendeten Anzahl individuell an das Bauteilgewicht sowie dessen Form angepasst werden kann, wobei sich dieser auch individuell an unterschiedlichste Bauteilformen anpassen kann, insbesondere wobei der Anbindedraht auch verformbar ist bzw. verformt wird. Bei einem Haken hingegen ist es von Vorteil, dass sich das Bauteil, vorzugsweise automatisiert, möglichst einfach von dem Trage- und/oder Haltemittel, insbesondere ohne Eingriff des Verzinkers, lösen lässt. Ein Gestell bietet sich insbesondere auch dann an, wenn eine Vielzahl von zumindest im Wesentlichen ähnlichen Bauteilen in einer Gruppenverzinkung verzinkt werden, insbesondere wobei die Bauteile an das Gestell angeordnet sind. Dabei versteht es sich letztlich, dass es wesentlich ist, dass das Trage- und/oder Haltemittel derart ausgebildet ist, dass es das Bauteil in dem Verzinkungsbad fixieren kann bzw. das Bauteil durch die einzelnen Prozessschritte des Feuerverzinkungsverfahrens transportieren kann.

Des Weiteren kann es gemäß einer bevorzugten Ausführungsform des erfindungsgemäßen Beschichtungsverfahren vorgesehen sein, dass ein kontinuierlicher Verfahrensablauf oder, bei einer anderen Ausführungsform, ein diskontinuierlicher Verfahrensablauf zur Beschichtung des Trage- und/oder Haltemittels vorgesehen ist. Ein kontinuierlicher Verfahrensablauf bzw. Durchlauf bietet sich insbesondere bei der Verwendung eines Drahtes bzw. eines Anbindedrahtes für das Trage- und/oder Haltemittel an, insbesondere wobei der Draht noch nicht in einzelne Segmente abgetrennt worden ist. Vorzugsweise ist der Draht zu einem Coil gewickelt und kann von diesem abgewickelt werden und anschließend die einzelnen Verfahrensschritte im ausgestreckten Zustand bzw. im langgestreckten Zustand des Verfahrens zur Beschichtung durchlaufen; nach Abschluss des Beschichtungsverfahrens kann der Draht dann erneut zu einem Coil aufgewickelt werden, insbesondere wobei er bei diesem Vorgang verformt und/oder verbogen wird. Vorteilhaft ist bei dem kontinuierlichen Verfahren, dass eine hohe Wirtschaftlichkeit und eine mögliche weitestgehende Automatisierbarkeit gegeben ist. Ein diskontinuierlicher Verfahrensablauf kann insbesondere bei einzelnen diskreten Trage- und/oder Haltemitteln, wie Haken und/oder Traversen, durchgeführt werden; dabei durchlaufen die diskreten, einzelnen segmentierten Trage- und/oder Haltemittel die einzelnen Behandlungsschritte des Beschichtungsverfahrens. Sofern auch einzelne Drahtabschnitte mit einem diskontinuierlichen Verfahren beschichtet werden, ist vorzugsweise vorgesehen, dass diese in einem langsamen horizontal rollierenden Korb für die einzelnen Prozessschritte angeordnet sind, so dass die Drahtabschnitte in der Bewegung sowohl gleichmäßig die Vorbehandlungsschritte als auch den Beschichtungsdurchgang durchlaufen können.

Auch eine lokale Beschichtung bzw. Überbeschichtung ist möglich, so dass auch insbesondere eine Mehrfachverwendung des Trage- und/oder Haltemittels gewährleistet werden kann. Sofern bei dem Trage- und/oder Haltemittel im Zuge einer Mehrfachverwendung Fehlstellen und/oder Beschädigungen in dem verzinkungsresistenten und/oder verzinkungsinerten Überzug bzw. in der Beschichtung auftreten, so können diese Trage- und/oder Haltemittel den einzelnen Verfahrensschritten des Beschichtungsprozess oder dem gesamten Beschichtungsprozess unterzogen werden.

Vorzugsweise lässt sich das Beschichtungverfahren, insbesondere das diskontinuierliche Produktions- bzw. Beschichtungsverfahren, an jedem Verzinkungsstandort umsetzen, so dass dies auch nachträglich in einem Verzinkungsbetrieb zur Beschichtung des Trage- und/oder Haltemittels integriert werden kann.

Bei einer weiteren, bevorzugten Ausführungsform ist vorgesehen, dass das Trage- und/oder Haltemittel einer Oberflächenvorbehandlung unterzogen wird, insbesondere durchläuft das Trage- und/oder Haltemittel die Oberflächenvorbehandlung vor der Beschichtung, insbesondere wobei die Oberflächenvobehandlung zumindest einen der nachfolgenden Schritte aufweist, vorzugsweise in nachstehend genannter Abfolge:

(i) Entfettung des Trage- und/oder Haltemittels,

(ii) Spülen des Trage- und/oder Haltemittels,

(iii) Beizen des Trage- und/oder Haltemittels,

(iv) Spülen des Trage- und/oder Haltemittels.

Dabei versteht es sich von selbst, dass während Oberflächenbehandlung das Trage- und/oder Haltemittel die Schritte mehrfach durchlaufen kann oder gegebenenfalls einzelne Vorbehandlungsschritte entfallen lässt. Vorzugsweise erhöht die Oberflächenvorbehandlung die Affinität der Oberfläche des Trage- und/oder Haltemittels für die Beschichtung, so dass eine bessere Anhaftung der Beschichtung an dem Trage- und/oder Haltemittel sichergestellt werden kann. Insbesondere wird somit gewährleistet, dass das Trage- und/oder Haltemittel verformt werden kann, ohne dass ein Abplatzen bzw. eine Beschädigung der Beschichtung während des Verformens zu befürchten ist. Die Oberflächenvorbehandlung dient zur Reinigung der Oberfläche des Trage- und/oder Haltemittels, zumindest für die Oberfläche, die beschichtet werden soll. Vorteilhafterweise kann durch die Reinigung eine Verunreinigung der Beschichtung und somit eine Verschlechterung der verzinkungsresistenten und/oder verzinkungsinerten Beschichtung entgegen gewirkt werden.

Darüber hinaus ist bei einer weiteren bevorzugten Ausführungsform der Oberflächenvorbehandlung vorgesehen, dass ein Materialabtrag des Trage- und/oder Haltemittels, insbesondere zur Steigerung der Affinität für die Beschichtung bzw. zur besseren Anhaftung der Beschichtung an der Oberfläche des Trage- und/oder Haltemittels, durchgeführt wird. Dieser Materialabtrag kann chemisch, insbesondere mit der vorgenannten Abfolge von einzelnen Vorbehandlungsschritten, und/oder mechanisch, beispielsweise durch Anrauhung der Oberfläche und/oder durch Bürsten der Oberfläche, erfolgen. Vorzugsweise wird eine zumindest im Wesentlichen metallisch blanke Oberfläche des Trage- und/oder Haltemittels sichergestellt.

Im Rahmen des erfindungsgemäßen Beschichtungsverfahrens ist es insbesondere vorgesehen, dass die Beschichtung, insbesondere nach der Oberflächenvorbehandlung, durch Spritzen, Aufsprühen, Tauchen, Walzen und/oder Pressen, vorzugsweise durch Aufsprühen und/oder Tauchen, auf die Oberfläche des Trage- und/oder Haltemittels aufgebracht wird. Ein Aufsprühen der Beschichtung bietet sich insbesondere in einem kontinuierlichen Verfahrensablauf des Beschichtungsprozesses an, da hierfür das Trage- und/oder Haltemittelmaterial nicht in einem separaten Behälter getaucht werden muss. Demzufolge ist das Tauchen besonders vorteilhaft im Zusammenhang mit einem diskontinuierlichen Batch-Prozess, da hierbei einzelne Trage- und/oder Haltemittel in das Tauchbad des Beschichtungsmaterials getaucht werden können.

Zudem ist es bei einer vorteilhaften Ausführungsform dieses Erfindungsaspekts vorgesehen, dass die Beschichtung als eine festhaftende und/oder trockene und/oder temperaturresistente, insbesondere zumindest im Wesentlichen bis Temperaturen von bis zu mindestens 460 °C, und/oder chemikalienresistente Oberfläche auf dem Trage- und/oder Haltemittel ausgebildet bzw. aufgebracht wird. Wie bereits zuvor im Zusammenhang mit dem erfindungsgemäßen Feuerverzinkungsverfahren beschrieben, bietet sich eine temperaturresistente und/oder chemikalienresistente Oberfläche auf dem Trage- und/oder Haltemittel insbesondere dadurch an, dass das Trage- und/oder Haltemittel durch den Feuerverzinkungsprozess nicht beeinflusst wird, insbesondere wobei auch keine Beeinflussung von dem Trage- und/oder Haltemittel auf das Bauteil ausgeht. Infolgedessen können Fehlverzinkungen an dem Bauteil zumindest im Wesentlichen vermieden werden.

Weiterhin kann es erfindungsgemäß vorgesehen sein, dass die Beschichtung mit einer Auftragsmenge berechnet als Flächengewicht der Beschichtung, im Bereich von 0,1 bis 150 g/m$^2$, bevorzugt von 0,3 bis 100 g/m$^2$, weiter bevorzugt von 0,5 bis 50 g/m$^2$, auf das Trage- und/oder Haltemittel aufgebracht wird. Des Weiteren ist bei einer weiteren und/oder ergänzenden Ausführungsform dieses Erfindungsaspekts vorgesehen, dass die Beschichtung mit einer Schichtdicke im Bereich von 1 bis 1.000 $\mu$m, insbesondere im Bereich von 2 bis 750 $\mu$m, vorzugsweise im Bereich von 3 bis 500 $\mu$m, bevorzugt im Bereich von 5 bis 250 $\mu$m, weiter bevorzugt im Bereich von 5 bis 200 $\mu$m, noch mehr bevorzugt im Bereich von 10 bis 100 $\mu$m, ganz besonders bevorzugt im Bereich von 25 bis 95 $\mu$m, auf das Trage- und/oder Haltemittel aufgebracht wird. Eine Beschichtung mit den vorgenannten Parametern ermöglicht eine deutliche Reduzierung des Nachbearbeitungsaufwandes des Bauteils nach der Feuerverzinkung.

Insbesondere kann das erfindungsgemäße Beschichtungsverfahren derart ausgestaltet sein, dass die Beschichtung des Trage- und/oder Haltemittels durch Temperaturbehandlung erhalten wird, insbesondere Härtung und/oder Einbrennen, eines polysiloxanhaltigen Ausgangsmaterials, insbesondere polyorganosiloxanhaltigen Ausgangsmaterials, vorzugsweise eines Silikonharzlackes, insbesondere in einer oxidierenden und/oder sauerstoffhaltigen Atmosphäre und/oder insbesondere bei einer Temperatur im Bereich von 150 °C bis 800 °C, vorzugsweise bei einer Temperatur von mindestens 160 °C, bevorzugt bei einer Temperatur von mindestens 250 °C, vorzugsweise für eine Zeitdauer im Bereich von 5 bis 500 Minuten, vorzugsweise für mindestens 30 Minuten, weiter bevorzugt für mindestens 45 Minuten. Zusätzlich ist bei einem anderen und/oder ergänzenden Verfahrensschritt der Beschichtung vorgesehen, dass die Beschichtung des Trage- und/oder Haltemittels in die Oberfläche des Trage- und/oder Haltemittels eingebrannt wird, vorzugsweise durch Temperaturbehandlung, insbesondere Härtung und/oder Einbrennen, eines polysiloxanhaltigen Ausgangsmaterials, insbesondere polyorganosiloxanhaltigen Ausgangsmaterials, vorzugsweise eines Silikonharzlackes, insbesondere in einer oxidierenden und/oder sauerstoffhaltigen Atmosphäre und/oder insbesondere bei einer Temperatur im Bereich von 150 °C bis 800 °C, vorzugsweise bei einer Temperatur von mindestens 160 °C, bevorzugt bei einer Temperatur von mindestens 250 °C, vorzugsweise für eine Zeitdauer im Bereich von 5 bis 500 Minuten, vorzugsweise für mindestens 30 Minuten, weiter bevorzugt für mindestens 45 Minuten.

Des Weiteren kann insbesondere das erfindungsgemäße Beschichtungsverfahren derart ausgestaltet sein, dass die Beschichtung des Trage- und/oder Haltemittels über weitere, grundsätzlich mögliche und/oder denkbare Verfahren zur Härtung erhalten wird, insbesondere wobei eine Temperaturbehandlung vermeidbar ist. Beispielsweise ist eine Strahlhärtung einer strahlhärtbaren und/oder strahlhärtende, insbesondere UV-strahlhärtbaren und/oder UV-härtende, Beschichtung und/oder Lacksystem mittels einer, insbesondere energiereichen, Strahlung, insbesondere UV-Strahlung, denkbar. Erfindungsgemäß sind auch weitere Verfahren, die eine Härtung der Beschichtung bedingen, möglich. Gemäß einer weiteren bevorzugten Ausführungsform ist das polysiloxanhaltige Ausgangsmaterial aus der Gruppe der Polysiloxane ausgewählt. Insbesondere ist das polysiloxanhaltige Ausgangsmaterial polyorganosiloxanhaltig. Insbesondere umfasst die Gruppe der Polysiloxane, die für das Ausgangsmaterial verwendet werden können, Polyaorganosiloxane, vorzugsweise Polyalkylsiloxane, Polyarylsiloxane, Polyarylalkylsiloxane, Polyorganosilalkylene und/oder Polysilarylensiloxane sowie deren Mischung und/oder Kombinationen. Das vorgenannte Ausgangsmaterial kann gegebenenfalls, insbesondere zur Steigerung der Elastizität, mit einem organischen Harz kombiniert werden. Als zu kombinierendes Harz kann insbesondere ein Harz ausgewählt aus der Gruppe von Alkalid-, Epoxid-, Melamin-, Phenol- und/oder Polyesterharze sowie deren Mischung oder Kombination verwendet werden.

Weiterhin kann es erfindungsgemäß vorgesehen sein, dass die Beschichtung zusätzlich mit einem insbesondere metallischen und/oder mineralischen (anorganischen) Zusatzstoff - Additiv - versehen wird oder in dieses hierin inkorporiert wird. Der Zusatzstoff kann insbesondere eine anorganische Metallverbindung, vorzugsweise mindestens ein Metalloxid, Metallnitrit, Metallcarbonat, Metallcarbid, Metallsilikat und/oder Metallphosphat umfassen. Die vorgenannten Zusatzstoffe können insbesondere aus der Gruppe von Magnesiumoxiden, Titanoxiden, Siliciumnitriden, Wolframcarbiden, Alkali- und Erdalkalicarbonaten, -phosphaten und -silikaten und Aluminiumphosphaten sowie deren Mischungen oder Kombinationen ausgewählt sein. Vorzugsweise wird der metallische und/oder mineralische (anorganische) Zusatzstoff (Additiv) bezogen auf die Beschichtung in Mengen von bis zu 50 Gew.-% des Zusatzstoffes eingesetzt und/oder inkorporiert. Die vorgenannten Zusatzstoffe können auch zu einer besseren Hitzebeständigkeit sowie zu einer erhöhten Chemikalienbeständigkeit beitragen.

Ebenfalls erfindungsgemäß bevorzugt ist es, wenn die Materialzusammensetzung der Beschichtung und/oder die Inhaltsstoffe der Beschichtung und/oder die insbesondere polymere Silicium/Sauerstoff-Verbindung sowie gegebenenfalls vorhandene weitere Komponenten der Beschichtung in mindestens einem vorzugsweise organischen Lösungs- und/oder Dispergiermittel, vorzugsweise ausgewählt aus der Gruppe von Alkoholen (Alkanolen), wie Isobutanol, und gegebenenfalls halogenierten Kohlenwasserstoffen, wie Tetrachlorkohlenstoff und/oder aromatische Kohlenwasserstoffe, wie Benzol, Toluol und/oder Xylol sowie deren Mischungen oder Kombinationen, gelöst und/oder dispergiert wird/werden. Insbesondere erfolgt die Lösung und/oder Dispergierung der Materialzusammensetzung der Beschichtung zu Zwecken des Auftrages. Vorteilhafterweise kann somit die Viskosität des Ausgangsmaterials bzw. der Beschichtung auf einen günstigen Wert eingestellt werden, insbesondere wobei das Ausgangsmaterial vorab in einer vorkondensierten Form vorlag. Zur Lösung werden demzufolge organische Lösungsmittel verwendet, insbesondere wobei die Ausgangsmaterialzusammensetzung eine gute Löslichkeit in Aromaten und halogenierten Kohlenwasserstoffverbindungen sowie Estern vorliegt. Vorzugsweise wird das Lösungs- und/oder Dispergiermittel nach Auftrag der Beschichtung entfernt. Insbesondere ist das Lösungs- und/oder Dispergiermittel nach der Temperaturbehandlung, insbesondere nach dem Einbrennen, entfernt worden. Letztlich dient das Lösungs- und/oder Dispergiermittel vorteilhafterweise zum vereinfachten Auftrag bzw. zur Einstellung einer Viskosität des Ausgangsmaterials der Beschichtung.

Erfindungsgemäß bevorzugt ist es, wenn die Beschichtung umformbar, insbesondere nicht spröde und/oder flexibel, ausgebildet wird, insbesondere derart, dass das Trage- und/oder Haltemittel, insbesondere nach dem Einbrennvorgang, verformbar, insbesondere aufwickelbar, ist. Vorteilhafterweise erfolgt ein Aufwickeln des Trage- und/oder Haltemittels, insbesondere wenn es als Anbindedraht vorliegt, in einem kontinuierlichen Verfahrensablauf der Beschichtung nach der Temperaturbehandlung. Hierbei wird insbesondere der Anbindedraht zu einem Coil gewickelt.

Für weitergehende Einzelheiten zu dem erfindungsgemäßen Beschichtungsverfahren kann zur Vermeidung unnötiger Wiederholungen auf die obigen Ausführungen zu dem erfindungsgemäßen Feuerverzinkungsverfahren verwiesen werden, welche in Bezug auf das erfindungsgemäße Beschichtungsverfahren entsprechend gelten.

Weiterer Gegenstand der vorliegenden Erfindung - gemäß einem **dritten Aspekt** der vorliegenden Erfindung - ist ein Trage- und/oder Haltemittel zur Verwendung in einem Feuerverzinkungsverfahren zum Transport und/oder zur Halterung und/oder zur Fixierung eines Bauteils,

wobei das Trage- und/oder Haltemittel zumindest bereichsweise mit einer verzinkungsresistenten und/oder verzinkungsinerten Beschichtung versehen ist, wobei die verzinkungsresistente und/oder verzinkungsinerte Beschichtung mindestens eine Silicium/Sauerstoff-Verbindung umfasst oder hieraus gebildet ist und

wobei die Beschichtung des Trage- und/oder Haltemittels durch Temperaturbehandlung eines polysiloxanhaltigen Ausgangsmaterials erhältlich ist.

Gemäß einer bevorzugten Ausführungsform ist vorgesehen, dass der die Beschichtung aufweisende Bereich der Oberfläche des Trage- und/oder Haltemittels derart ausgebildet ist, dass er nach Abschluss des Feuerverzinkungsvorgangs und/oder nach Austauchen aus dem mit der Zinkschmelze befüllten Verzinkungskessel, insbesondere aus dem schmelzflüssigen Verzinkungsbad, zumindest im Wesentlichen keine Zinkanhaftungen aufweist.

Im Übrigen ist vorteilhafterweise vorgesehen, dass das Trage- und/oder Haltemittel als Befestigungs- und/oder Anschlagsmittel, insbesondere als Draht, vorzugsweise als Draht mit einem Durchmesser von 2 mm bis 3 mm, als Haken, als Gestell, als Auflage und/oder als Traverse oder dergleichen ausgebildet ist.

Des Weiteren ist bei einer bevorzugten Ausgestaltungsvariante dieses Erfindungsaspekts vorgesehen, dass die Beschichtung eine festhaftende und/oder trockene und/oder temperaturresistente, insbesondere zumindest im Wesentlichen bis Temperaturen von bis zu mindestens 460 °C temperaturresistente, und/oder chemikalienresistente Oberfläche auf dem Trage- und/oder Haltemittel ausbildet. Zudem ist es gemäß einer weiteren, bevorzugten Ausführungsform der vorliegenden Erfindung vorgesehen, dass die Beschichtung mit einer Auftragsmenge, berechnet als Flächengewicht der Beschichtung, im Bereich von 0,1 bis 150 g/m$^2$, bevorzugt von 0,3 bis 100 g/m$^2$, weiter bevorzugt von 0,5 bis 50 g/m$^2$, auf das Trage- und/oder Haltemittel aufgebracht ist.

Weiterhin kann es erfindungsgemäß vorgesehen sein, dass die Beschichtung mit einer Schichtdicke im Bereich von 1 bis 1.000 $\mu$m, insbesondere im Bereich von 2 bis 750 $\mu$m, vorzugsweise im Bereich von 3 bis 500 $\mu$m, bevorzugt im Bereich von 5 bis 250 $\mu$m, weiter bevorzugt im Bereich von 5 bis 200 $\mu$m, noch mehr bevorzugt im Bereich von 10 bis 100 $\mu$m, ganz besonders bevorzugt im Bereich von 25 bis 95 $\mu$m, auf das Trage- und/oder Haltemittel aufgebracht ist.

Wie bereits vorstehend im Zusammenhang mit dem erfindungsgemäßen Feuerverzinkungsverfahren geschildert, ist die Beschichtung des Trage- und/oder Haltemittels erhalten durch Temperaturbehandlung, insbesondere Härtung und/oder Einbrennen, eines polysiloxanhaltigen Ausgangsmaterials, insbesondere polyorganosiloxanhaltigen Ausgangsmaterials, vorzugsweise eines Silikonharzlackes, insbesondere in einer oxidierenden und/oder sauerstoffhaltigen Atmosphäre und/oder insbesondere bei einer Temperatur im Bereich von 150 °C bis 800 °C, vorzugsweise bei einer Temperatur von mindestens 160 °C, bevorzugt bei einer Temperatur von mindestens 250 °C, vorzugsweise für eine Zeitdauer im Bereich von 5 bis 500 Minuten, vorzugsweise für mindestens 30 Minuten, weiter bevorzugt für mindestens 45 Minuten. Zudem kann zusätzlich und/oder ergänzend dazu vorgesehen sein, dass die Beschichtung des Trage- und/oder Haltemittels in die Oberfläche des Trage- und/oder Haltemittels eingebrannt ist, vorzugsweise durch Temperaturbehandlung, insbesondere Härtung und/oder Einbrennen, eines polysiloxanhaltigen Ausgangsmaterials, insbesondere polyorganosiloxanhaltigen Ausgangsmaterials, vorzugsweise eines Silikonharzlackes, insbesondere in einer oxidierenden und/oder sauerstoffhaltigen Atmosphäre und/oder insbesondere bei einer Temperatur im Bereich von 150 °C bis 800 °C, vorzugsweise bei einer Temperatur von mindestens 160 °C, bevorzugt bei einer Temperatur von mindestens 250 °C, vorzugsweise für eine Zeitdauer im Bereich von 5 bis 500 Minuten, vorzugsweise für mindestens 30 Minuten, weiter bevorzugt für mindestens 45 Minuten.

Wie bereits zuvor im Zusammenhang mit dem erfindungsgemäßen Feuerverzinkungsverfahren bzw. Beschichtungsverfahren beschrieben, kann das polysiloxanhaltige Ausgangsmaterial, insbesondere das polyorganosiloxanhaltige Ausgangsmaterial, aus der Gruppe von Polysiloxanen, insbesondere Polyorganosiloxanen, vorzugsweise Polyalkylsiloxanen, Polyarylsiloxanen, Polyarylalkylsiloxanen, Polyorganosilalkylenen und/oder Polysilarylensiloxanen, sowie deren Mischungen und Kombinationen, gegebenenfalls in Kombination mit mindestens einem weiteren, hiervon verschiedenen organischen Harz, insbesondere ausgewählt aus der Gruppe von Alkyd-, Epoxid-, Melamin-, Phenol- und/oder Polyesterharzen sowie deren Mischungen oder Kombinationen, ausgewählt sein.

Gemäß einer weiteren Ausführungsform der vorliegenden Erfindung kann die Beschichtung zusätzlich mit einem insbesondere metallischen und/oder mineralische (anorganische) Zusatzstoff (Additiv), insbesondere mindestens einer anorganischen Metallverbindung, vorzugsweise mindestens einem Metalloxid, Metallnitrid, Metallcarbonat, Metallcarbid, Metallsilikat und/oder Metallphosphat, versehen sein oder dieses enthalten, insbesondere ausgewählt aus der Gruppe von Magnesiumoxiden, Titanoxiden, Siliciumnitriden, Wolframcarbiden, Alkali- und Erdalkalicarbonaten, -phosphaten und -silikaten, und Aluminiumphosphaten sowie deren Mischungen und Kombinationen. Insbesondere ist der metallische und/oder mineralische (anorganische) Zusatzstoff (Additiv) bezogen auf die Beschichtung in Mengen von bis zu 50 Gew.-% des Zusatzstoffes vorhanden.

Bei einer ganz besonders bevorzugten Ausführungsform ist die Beschichtung umformbar, insbesondere nichtspröde und/oder flexibel, ausgebildet, insbesondere derart, dass das Trage- und/oder Haltemittel, insbesondere nach dem Einbrennvorgang, verformbar, insbesondere aufwickelbar ist. Bei einer weiteren bevorzugten Ausführungsform ist das Trage- und/oder Haltemittel derart ausgebildet, dass eine sich nach der Beschichtung anschließende Umformung und/oder Verformung des Trage- und/oder Haltemittels zumindest im Wesentlichen ohne Beschädigung der Beschichtung ermöglicht ist, insbesondere wobei ein Abplatzen und/oder Brechen der Beschichtung zumindest im Wesentlichen vermieden wird.

Für weitergehende Einzelheiten zu dem erfindungsgemäßen Trage- und/oder Haltemittel kann zur Vermeidung unnötiger Wiederholungen auf die obigen Ausführungen auf das erfindungsgemäße Feuerverzinkungsverfahren und auf das erfindungsgemäße Beschichtungsverfahren verwiesen werden, welche in Bezug auf das erfindungsgemäße Trage- und/oder Haltemittel entsprechend gelten.

Weiterer Gegenstand der vorliegenden Erfindung ist ein Trage- und/oder Haltemittel erhältlich nach einem Beschichtungsverfahren gemäß dem zweiten Aspekt der vorliegenden Erfindung, wie vorstehend beschrieben.

Vorteilhafterweise erfolgt das erfindungsgemäße Feuerverzinkungsverfahren in einer Anlage zur Feuerverzinkung eines Bauteils, insbesondere eines Eisen- oder Stahlbauteils, bevorzugt Stahlbauteils, vorzugsweise für die Automobil- oder Kraftfahrzeugindustrie,

mit mindestens einer Feuerverzinkungsvorrichtung (Schmelztauchverzinkungsvorrichtung) zur Feuerverzinkung (Schmelztauchverzinkung), wobei die Feuerverzinkungsvorrichtung einen mit einer Zinkschmelze befüllten Verzinkungskessel, insbesondere ein schmelzflüssiges Verzinkungsbad, umfasst, und

mit einem Trage- und/oder Haltemittel nach dem dritten Aspekt der vorliegenden Erfindung, insbesondere vorgesehen zum Transport und/oder zur Halterung des Bauteils, insbesondere wobei das Bauteil in ein schmelzflüssiges Verzinkungsbad, getaucht wird, vorzugsweise wobei das Trage- und/oder Haltemittel zumindest im Wesentlichen gemeinsam mit dem Bauteil zumindest bereichsweise in die Zinkschmelze eingetaucht und nach Abschluss des Feuerverzinkungsvorgangs wieder ausgetaucht wird.

Gemäß einer ganz besonders bevorzugten Ausführungsform weist die vorgenannte Anlage wenigstens eine der nachfolgenden Behandlungsvorrichtungen, vorzugsweise in der nachfolgend aufgeführten Abfolge, auf:

(A) mindestens eine Entfettungsvorrichtung, insbesondere mindestens ein Entfettungsbad, zur vorzugsweise alkalischen Entfettungsbehandlung des Bauteils; in Prozessrichtung nachgeschaltet oder stromabwärts zu (A)

(B) gegebenenfalls mindestens eine Spülvorrichtung, insbesondere mindestens ein Spülbad, zum Spülen des in der Entfettungsvorrichtung (A) entfetteten Bauteils; in Prozessrichtung nachgeschaltet oder stromabwärts zu (B)

(C) mindestens eine Beizvorrichtung, insbesondere mindestens ein Beizbad, zur vorzugsweise sauren Beizbehandlung des in der Entfettungsvorrichtung (A) entfetteten und gegebenenfalls in der Spülvorrichtung (B) gespülten Bauteils; in Prozessrichtung nachgeschaltet oder stromabwärts zu (C)

(D) gegebenenfalls mindestens eine Spülvorrichtung, insbesondere mindestens ein Spülbad, zum Spülen des in der Beizvorrichtung (C) gebeizten Bauteils; in Prozessrichtung nachgeschaltet oder stromabwärts zu (D)

(E) mindestens eine Flussmittelbehandlungsvorrichtung zur Flussmittelbehandlung des in der Beizvorrichtung (C) gebeizten und gegebenenfalls in der Spülvorrichtung (D) gespülten Bauteils, wobei die Flussmittelbehandlungsvorrichtung mindestens ein Flussmittelbad mit einer Flussmittelzusammensetzung enthält; in Prozessrichtung nachgeschaltet oder stromabwärts zu (E)

(F) gegebenenfalls mindestens eine Trocknungsvorrichtung zur Trocknung des in der Flussmittelbehandlungsvorrichtung (E) einer Flussmittelbehandlung unterzogenen Bauteils; in Prozessrichtung nachgeschaltet oder stromabwärts zu (F)

(G) mindestens eine Feuerverzinkungsvorrichtung.

Für weitergehende Einzelheiten zu der Anlage kann zur Vermeidung unnötiger Wiederholungen auf die obigen Ausführungen zu dem erfindungsgemäßen Feuerverzinkungsverfahren, zu den erfindungsgemäßen Beschichtungsverfahren und zu dem erfindungsgemäßen Trage- und/oder Haltemittel verwiesen werden, welche in Bezug auf die Anlage entsprechend gelten.

Insbesondere kann ein erfindungsgemäßes Trage- und/oder Haltemittel bzw. eine verzinkungsresistente und/oder verzinkungsinerte Beschichtung in einem erfindungsgemäßen Feuerverzinkungsverfahren verwendet werden.

Im Rahmen der Verwendung ist insbesondere die Verwendung eines erfindunsgemäßen Trage- und/oder Haltemittels nach dem dritten Aspekt der vorliegenden Erfindung in einem Feuerverzinkungsverfahren, insbesondere in einem Feuerverzinkungsverfahren gemäß dem ersten Aspekt der vorliegenden Erfindung, vorgesehen.

Des Weiteren ist es bei einer vorteilhaften Ausgestaltung vorgesehen, dass die verzinkungsresistente und/oder verzinkungsinerte, insbesondere zumindest im Wesentlichen verzinkungsabweisende, Beschichtung verwendet wird. Die verzinkungsresistente und/oder verzinkungsinerte, insbesondere zumindest im Wesentlichen verzinkungsabweisende, Beschichtung weist dabei mindestens eine insbesondere polymere Silicium/Sauerstoff-Verbindung auf bzw. umfasst diese oder wird hieraus gebildet, bevorzugt ausgewählt aus der Gruppe von Siliciumoxiden, Silikaten, Polykieselsäuren und/oder Polysiloxanen, insbesondere Polyorganosiloxanen sowie deren Mischungen oder Kombinationen. Erfindungsgemäß ist es vorgesehen, dass die vorgenannte Beschichtung zur Einsparung von Zink, insbesondere zur Reduzierung der zum Feuerverzinken eines Bauteils benötigten Menge, verwendet wird.

Die Verwendung einer verzinkungsresistenten und/oder verzinkungsinerten, insbesondere zumindest im Wesentlichen verzinkungsabweisenden, Beschichtung, insbesondere wie zuvor gemäß dem dritten Aspekt der vorliegenden Erfindung definiert, führt zur Einsparung von Zink, insbesondere zur Reduzierung der zum Feuerverzinken eines Bauteils benötigten Zinkmenge, wobei die verzinkungsresistente und/oder verzinkungsinerte, insbesondere zumindest im Wesentlichen verzinkungsabweisende, Beschichtung mindestens eine Silicium/Sauerstoff-Verbindung umfasst oder hieraus gebildet ist, bevorzugt ausgewählt aus der Gruppe von Siliciumoxiden, Silikaten, Polykieselsäuren und/oder Polysiloxanen, insbesondere Polyorganosiloxanen, sowie deren Mischungen und Kombinationen.

Im Übrigen führt die Verwendung einer verzinkungsresistenten und/oder verzinkungsinerten, insbesondere im Wesentlichen verzinkungsabweisenden, Beschichtung, insbesondere nach einem der ersten bis dritten Aspekte der vorliegenden Erfindung, wobei die verzinkungsresistente und/oder verzinkungsinerte, insbesondere zumindest im Wesentlichen verzinkungsabweisende, Beschichtung mindestens eine Silicium/Sauerstoff-Verbindung umfasst oder hieraus gebildet ist, bevorzugt ausgewählt aus der Gruppe von Siliciumoxiden, Silikaten, Polykieselsäuren und/oder Polysiloxanen, insbesondere Polyorganosiloxanen, sowie deren Mischungen und Kombinationen, zur Vermeidung einer Verlötung zwischen einem Bauteil und einem Trage- und/oder Haltemittel, vorzugsweise vorgesehen zum Transport und/oder zur Halterung des Bauteils, insbesondere zur Vermeidung einer Verlötung zwischen einem Bauteil und einem Trage- und/oder Haltemittel gemäß dem dritten Aspekt der vorliegenden Erfindung in einem Feuerverzinkungsverfahren, insbesondere in einem Feuerverzinkungsverfahren gemäß dem ersten Aspekt der vorliegenden Erfindung.

Die Verwendung einer verzinkungsresistenten und/oder verzinkungsinerten, insbesondere zumindest im Wesentlichen verzinkungsabweisenden, Beschichtung, insbesondere wie zuvor gemäß dem dritten Aspekt der vorliegenden Erfindung definiert, führt auch zur Vermeidung einer Verlötung zwischen einem Bauteil und einem Trage- und/oder Haltemittel, welches vorzugsweise vorgesehen ist zum Transport und/oder zur Halterung des Bauteils, insbesondere zur Vermeidung einer Verlötung zwischen einem Bauteil und einem erfindungsgemäßen Trage- und/oder Haltemittel gemäß dem dritten Aspekt der vorliegenden Erfindung in einem Feuerverzinkungsverfahren, insbesondere in einem Feuerverzinkungsverfahren gemäß dem ersten Aspekt der vorliegenden Erfindung, wobei die verzinkungsresistente und/oder verzinkungsinerte, insbesondere zumindest im Wesentlichen verzinkungsabweisende, Beschichtung mindestens eine Silicium/SauerstoffVerbindung umfasst oder hieraus gebildet ist, bevorzugt ausgewählt aus der Gruppe von Siliciumoxiden, Silikaten, Polykieselsäuren und/oder Polysiloxanen, insbesondere Polyorganosiloxanen, sowie deren Mischungen und Kombinationen.

Für weitergehende Einzelheiten zu der zuvor beschriebenen Verwendung kann auf die obigen Ausführungen in Bezug auf die übrigen Erfindungsaspekte verwiesen werden, welche in entsprechender Weise auch für die Verwendung gelten.

Weitere Merkmale, Vorteile und Anwendungsmöglichkeiten der vorliegenden Erfindung ergeben sich aus der nachfolgenden Beschreibung von Ausführungsbeispielen anhand von Zeichnungen und den Zeichnungen selbst. Dabei bilden alle beschriebenen und/oder bildlichen dargestellten Merkmale für sich oder in beliebiger Kombination den Gegenstand der vorliegenden Erfindung, unabhängig von ihrer Zusammenfassung in den Ansprüchen und deren Rückbeziehungen.

Es zeigt:

Fig. 1    eine schematische Darstellung einer Verzinkungsvorrichtung zur Durchführung eines erfindungsgemäßen Feuerverzinkungsverfahrens gemäß einer besonderen Ausführungsform der vorliegenden Erfindung;

Fig. 2    eine schematische Darstellung einer Verzinkungsvorrichtung zur Durchführung eines erfindungsgemäßen Feuerverzinkungsverfahrens gemäß einer besonderen Ausführungsform der vorliegenden Erfindung;

Fig. 3    eine schematische Darstellung eines erfindungsgemäßen Trage- und/oder Haltemittels gemäß einer besonderen Ausführungsform der vorliegenden Erfindung;

Fig. 4    eine schematische Darstellung eines erfindungsgemäßen Trage- und/oder Haltemittels gemäß einer besonderen Ausführungsform der vorliegenden Erfindung;

Fig. 5    eine schematische Darstellung eines erfindungsgemäßen Trage- und/oder Haltemittels gemäß einer besonderen Ausführungsform der vorliegenden Erfindung;

Fig. 6    eine schematische Darstellung eines erfindungsgemäßen Trage- und/oder Haltemittels gemäß einer besonderen Ausführungsform der vorliegenden Erfindung;

Fig. 7    eine schematische Darstellung eines weiteren erfindungsgemäßen Trage- und/oder Haltemittels mit einem an dem erfindungsgemäßen Trage- und/oder Haltemittel angeordneten Bauteil gemäß einer besonderen Ausführungsform der vorliegenden Erfindung;

Fig. 8    eine schematische Querschnittsansicht eines erfindungsgemäßen Trage- und/oder Haltemittels gemäß einer besonderen Ausführungsform der vorliegenden Erfindung;

Fig. 9    eine schematische Querschnittsansicht eines weiteren erfindungsgemäßen Trage- und/oder Haltemittels gemäß einer besonderen Ausführungsform der vorliegenden Erfindung;

Fig. 10    einen schematischen Verfahrensablauf der einzelnen Stufen bzw. Verfahrensschritte des erfindungsgemäßen Verfahrens zur Feuerverzinkung nach einer besonderen Ausführungsform der vorliegenden Erfindung;

Fig. 11    einen schematischen Verfahrensablauf der einzelnen Stufen bzw. Verfahrensschritt des erfindungsgemäßen Verfahrens zur Beschichtung eines Trage- und/oder Haltemittels nach einer besonderen Ausführungsform der vorliegenden Erfindung; und

Fig. 12    eine schematische Darstellung einer Anlage zur Feuerverzinkung gemäß einer besonderen Ausführungsform der vorliegenden Erfindung.

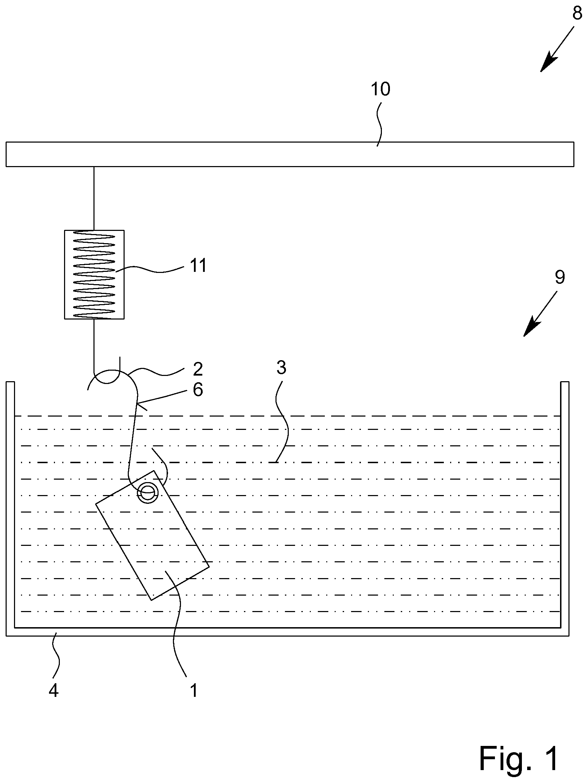

In Fig. 1 ist schematisch das Eintauchen des Bauteils 1 in den die Zinkschmelze 3 aufweisenden Verzinkungskessel 4 gezeigt. Dabei ist das Bauteil 1 an einem Trage- und/oder Haltemittel 2 angeordnet. Weiter zeigt die Fig. 1, dass das Trage- und/oder Haltemittel 2 über ein Federmittel 11 verschiebbar an einer Traverse 10 angeordnet ist. Das Federmittel 11 ist dabei derart ausgebildet, dass es das Bauteil 1 über das Trage- und/oder Haltemittel 2 aus der Zinkschmelze 3 bzw. in die Zinkschmelze 3 aus- bzw. eintauchen kann.

Zudem wird an Fig. 1 deutlich, dass das Trage- und/oder Haltemittel 2 zumindest bereichsweise gemeinsam mit dem Bauteil 1 in die Zinkschmelze 3 eingetaucht wird. Nicht dargestellt ist, dass nach Austauchen des Trage- und/oder Haltemittels 2 aus der Zinkschmelze 3 keine Zinkanhaftungen an der Oberfläche 6 des Trage- und/oder Haltemittels 2 vorhanden sind. Darüber hinaus ist nicht dargestellt, dass es zwischen dem Bauteil 1 und dem Trage- und/oder Haltemittel 2 zu keiner Verlötung zwischen dem Bauteil 1 und dem Trage- und/oder Haltemittel 2 kommt, so dass das Bauteil 1 ohne Beschädigung der Zinkschicht des Bauteils 1 von dem Trage- und/oder Haltemittel 2 entfernt werden kann.

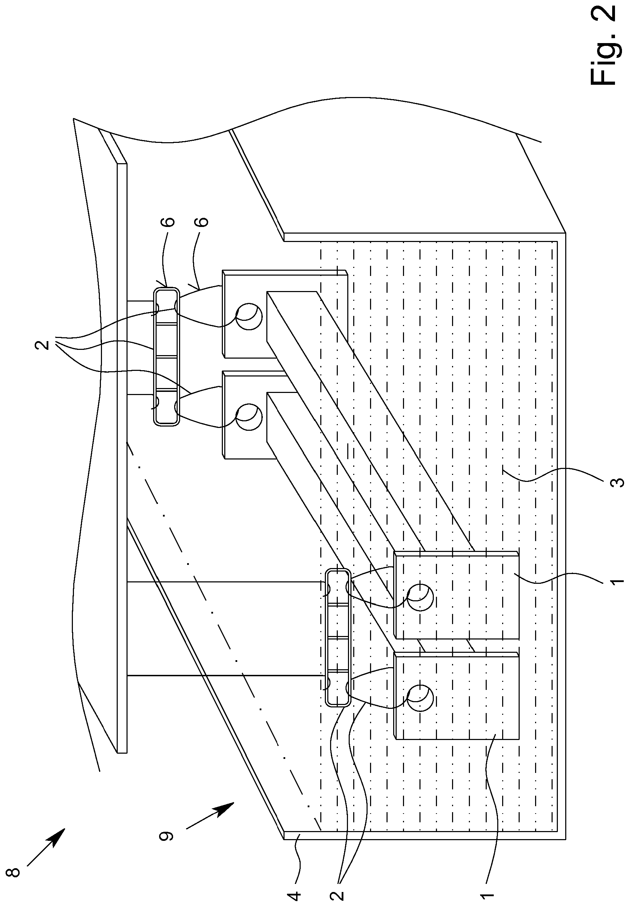

Des Weiteren zeigt Fig. 2, dass, sofern komplexe Bauteilformen bzw. große Bauteile vorhanden sind, eine Mehrzahl von Trage- und/oder Haltemittel 2 zum Transport sowie zur Fixierung des Bauteils 1 verwendet werden. In Fig. 2 ist das Trage- und/oder Haltemittel 2 sowohl als Gestell als auch als Anbindedraht ausgebildet, insbesondere wobei der Anbindedraht an das Gestell sowie an das Bauteil 1 angeschlagen wird. Das Trage- und/oder Haltemittel 2 bzw. das Gestell und der Anbindedraht werden gemeinsam mit dem Bauteil 1 in die Zinkschmelze 3 des Verzinkungskessels 4 bzw. der Feuerverzinkungsvorrichtung 9 getaucht. Es ist zu erkennen, dass er Anbindedraht bzw. das Trage- und/oder Haltemittel 2 zum Befestigen des Bauteils 1 verformt bzw. verbogen worden ist. Nicht dargestellt ist, dass nach Austauchen aus der Zinkschmelze 3 bzw. aus dem Verzinkungsbad die Trage- und/oder Haltemittel 2 von dem Bauteil 1 gelöst werden. Weiter ist nicht dargestellt, dass die Beschichtung 5 des Anbindedrahtes bzw. des Trage- und/oder Haltemittels 2 dabei derart ausgebildet ist, dass sich bei Verformung des Trage- und/oder Haltemittels 2 keine Beschädigung der Beschichtung 5 ergibt, insbesondere wobei ein Abplatzen der Beschichtung 5 vermieden wird.

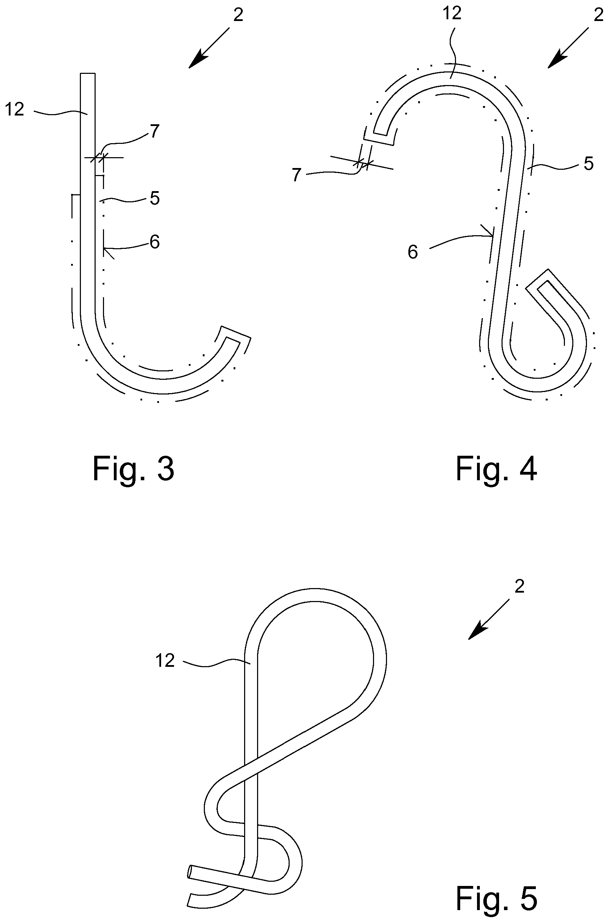

Fig. 3 zeigt schematisch eine Seitenquerschnittsansicht eines erfindungsgemäßen Trage- und/oder Haltemittels 2. Auf dem unbeschichteten Trage- und/oder Haltemittel 12 ist zumindest bereichsweise eine Beschichtung 5 aufgebracht, so dass die beschichtete Oberfläche 6 des Trage- und/oder Haltemittels 2 mit dem Bauteil 1 in einer nicht dargestellten Verwendungsform in Kontakt gebracht werden kann. Die Beschichtung 5 weist nach Fig. 3 eine Schichtdicke 7 auf. Das Trage- und/oder Haltemittel 2 ist gemäß Fig. 3 als Haken ausgebildet.

Eine weitere Ausführungsform des Trage- und/oder Haltemittels 2 ist anhand von Fig. 4 ersichtlich. Erneut ist das Trage- und/oder Haltemittel 2 in Form eines Hakens ausgebildet. Das Trage- und/oder Haltemittel 2 nach Fig. 4 weist eine das unbeschichtete Trage- und/oder Haltemittel 12 vollumschließende Beschichtung 5 auf. Die Beschichtung 5 weist eine Schichtdicke 7 auf. Nicht dargestellt ist, dass die Beschichtung 5 derart ausgebildet ist, dass zumindest im Wesentlichen keine Zinkanhaftungen auf der beschichteten Oberfläche 6 des Trage- und/oder Haltemittels 2 nach Austauchen aus der Zinkschmelze 3 vorhanden sind.

Im Übrigen zeigt Fig. 5 die Ausführungsform des Trage- und/oder Haltemittels 2 als Anbindedraht, wobei der Anbindedraht um sich selbst gewickelt worden ist. Das Trage- und/oder Haltemittel 2 nach Fig. 5 ist demgemäß verformt und wird in einem nicht dargestellten Verwendungsbeispiel bei Anordnung bzw. nach Lösung von dem Bauteil 1 verformt bzw. um sich selbst gewickelt, vorzugsweise zur Erhöhung der Tragfähigkeit bzw. der Stabilität.

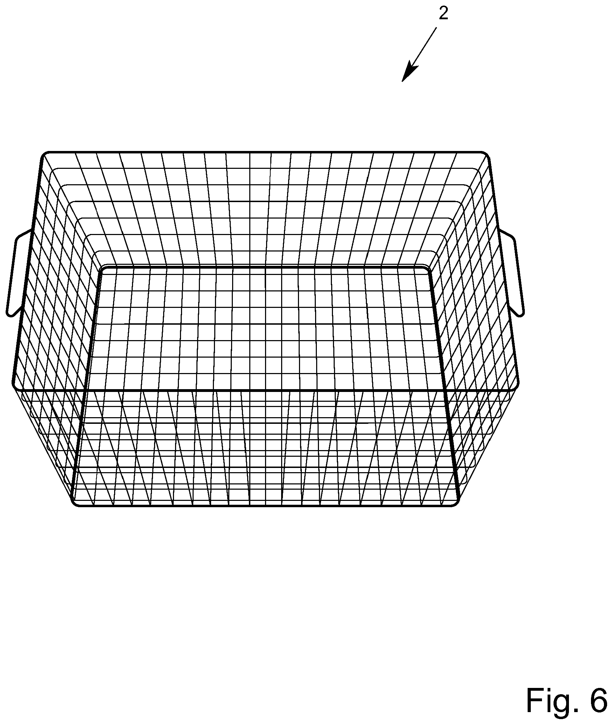

In Fig. 6 wird ein korbähnliches bzw. ein kastenähnliches Trage- und/oder Haltemittel 2 gezeigt. Der Gitterkasten dient zur Aufnahme und zum Transport von Bauteilen 1 in einem nicht dargestellten Verwendungsbeispiel, insbesondere wobei der Korb bzw. das Trage- und/oder Haltemittel 2 zumindest bereichsweise gemeinsam mit dem Bauteil 1 oder den Bauteilen 1 in die Zinkschmelze 3 getaucht wird. Weiterhin ist nicht dargestellt, dass der Gitterkasten zur Aufnahme einer Mehrzahl von Bauteilen 1, insbesondere einer Bauteilgruppe, ausgebildet ist.

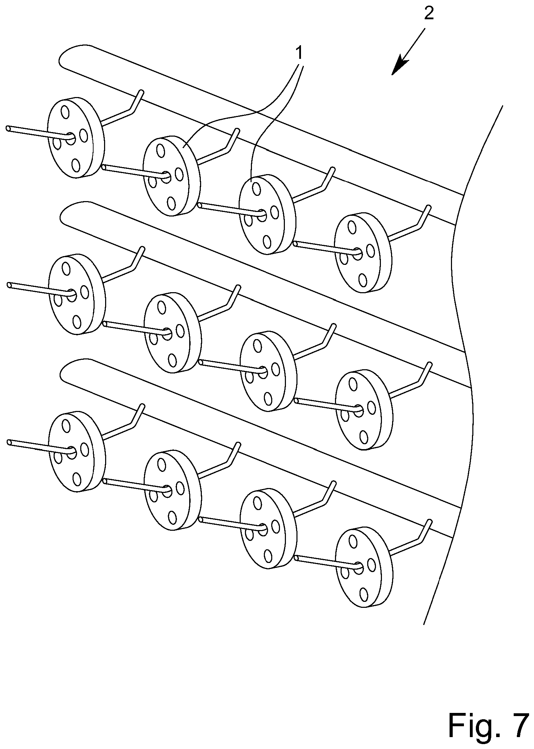

Gemäß dem in Fig. 7 dargestellten Trage- und/oder Haltemittel 2 können die Bauteile 1 auf einem Gestell bzw. einer Auflage angeordnet sein. Das Trage- und/oder Haltemittel 2 nach Fig. 7 ist derart ausgebildet, dass es zur Aufnahme bzw. zur Anordnung einer Mehrzahl bzw. Vielzahl von Bauteilen 1 dient, insbesondere wobei die Bauteile 1 in einem nicht dargestellten Verwendungsbeispiel gemeinsam verzinkt werden.

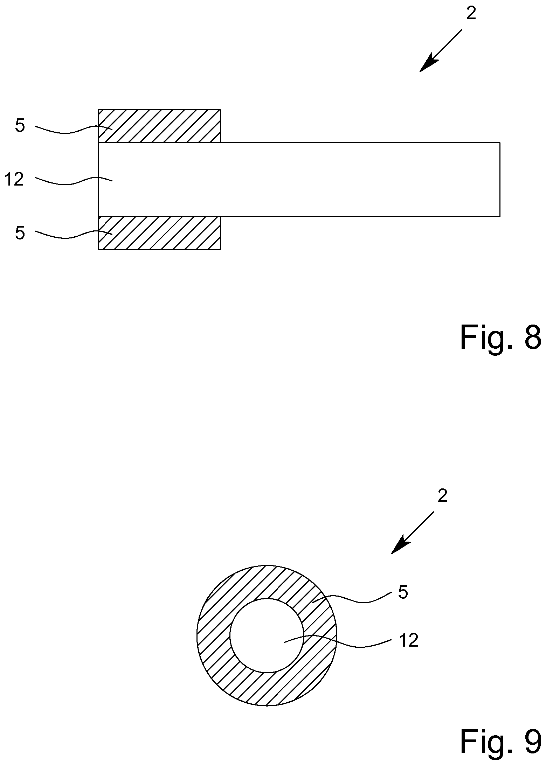

Die Fig. 8 und 9 zeigen den Schichtaufbau des Trage- und/oder Haltemittels 2 bzw. die Beschichtung 5 auf dem unbeschichteten Trage- und/oder Haltemittel 12. Gemäß Fig. 8 ist die Beschichtung 5 lediglich bereichsweise auf dem unbeschichteten Trage- und/oder Haltemittel 12 vorgesehen. Die Fig. 9 zeigt den Querschnitt eines Trage- und/oder Haltemittels 2, welches als Draht bzw. Anbindedraht ausgebildet ist. Die Oberfläche des Drahtes wird dabei vollumfänglich von der Beschichtung 5 umschlossen.

Für weitergehende Einzelheiten zu dem erfindungsgemäßen Trage- und/oder Haltemittel 2 kann auf die vorstehenden allgemeinen Ausführungen zu dem Trage- und/oder Haltemittel 2 nach der folgenden Erfindung verwiesen werden.

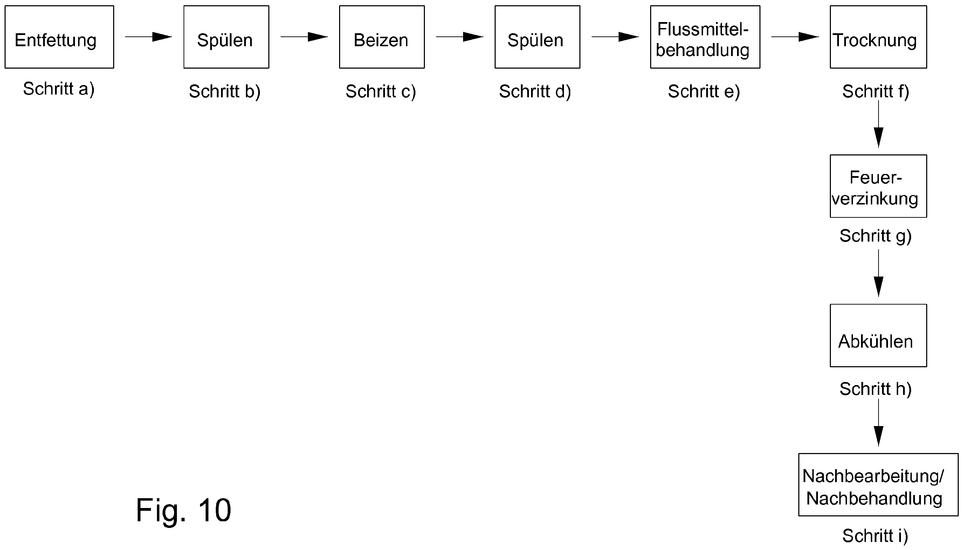

In dem in Fig. 10 dargestellten Verfahrensablaufschema zur Feuerverzinkung sind die sukzessiven Verfahrensstufen bzw. Verfahrensschritte (a) bis (i) schematisch dargestellt, wobei die Verfahrensschritte (a) bis (i) ausgenommen der Schritt (g), insbesondere die Verfahrensschritte (h) und (i), optional sind.

Gemäß dem in Fig. 1 dargestellten Schema ist der Verfahrensablauf wie folgt, wobei das erfindungsgemäße Verfahren die nachfolgend genannten Schritte sukzessiv gemäß dieser Reihenfolge umfasst: Entfettung (Schritt a, optional), Spülen (Schritt b, optional), Beizen (Schritt c, optional), Spülen (Schritt d, optional), Flussmittelbehandlung (Schritt e, optional), Trocknung (Schritt f, optional), Feuerverzinkung (Schritt g), Abkühlung (Schritt h, optional) sowie Nachbearbeitung bzw. Nachbehandlung (Schritt i, optional).

Für weitergehende Einzelheiten zu dem erfindungsgemäßen Verfahrensablauf zur Feuerverzinkung kann auf die vorstehenden allgemeinen Ausführungen zu dem erfindungsgemäßen Feuerverzinkungsverfahren verwiesen werden.

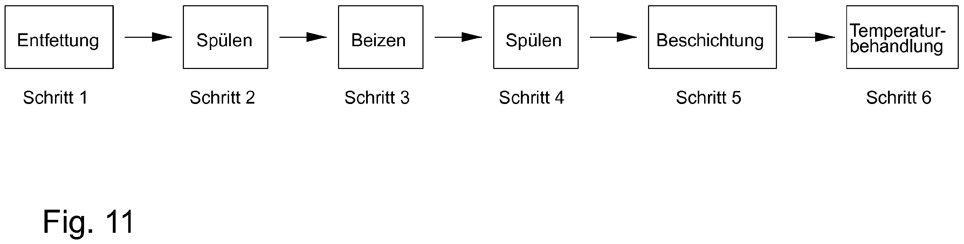

Das die sukzessiven Verfahrensstufen bzw. Verfahrensschritt 1 bis 6 umfassende Verfahrensablaufschema zur Beschichtung des Trage- und/oder Haltemittels 12 ist in Fig. 11 dargestellt, wobei alle Schritte außer der Schritt 5 optional sind.

Das in Fig. 11 dargestellte Schema umfasst die nachfolgend genannten Schritte sukzessiv gemäß dieser Reihenfolge: Entfettung (Schritt 1, optional), Spülen (Schritt 2, optional), Beizen (Schritt 3, optional), Spülen (Schritt 4, optional), Beschichtung (Schritt 5) sowie Temperaturbehandlung (Schritt 6, optional).

Die Schritte 1 bis 4 des Beschichtungsverfahrens nach Fig. 11 umfassen eine Oberflächenvorbehandlung des Trage- und/oder Haltemittels 12, insbesondere zum Materialabtrag auf der Oberfläche des unbeschichteten Trage- und/oder Haltemittels 12 zur Erhöhung der Affinität des Trage- und/oder Haltemittels 12 für die Beschichtung 5. Die in Fig. 11 gezeigte Oberflächenvorbehandlung wird chemisch ausgeführt. In einem weiteren nicht dargestellten Verfahrensablaufschema kann auch eine andere Oberflächenvorbehandlung durchgeführt werden, wobei die Oberflächenvorbehandlung einen Materialabtrag der Oberfläche des unbeschichteten Trage- und/oder Haltemittels 12 umfasst. Beispielsweise kann diese Oberflächenvorbehandlung mechanisch, insbesondere durch Bürsten bzw. Anrauhung der Oberfläche des unbeschichteten Trage- und/oder Haltemittels 12, erfolgen.

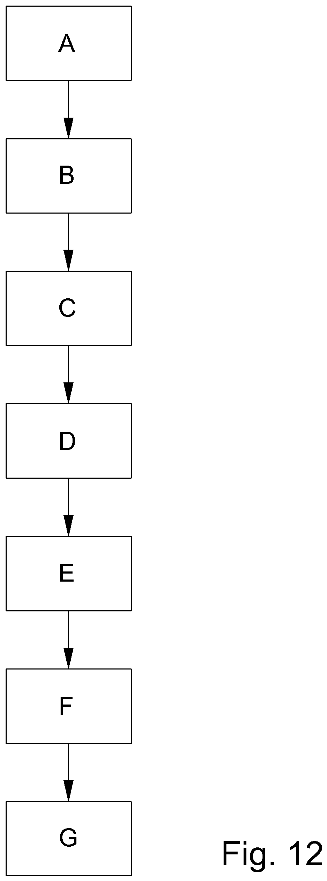

In Fig. 12 ist schematisch die Anlage zur Feuerverzinkung 8 zur Durchführung eines Feuerverzinkungsverfahrens nach der vorliegenden Erfindung mit den einzelnen Vorrichtungen (a) bis (g) dargestellt, wobei die Vorrichtungen (A), (B), (C), (D), (E) sowie (F) optional sind.

Gemäß dem in Fig. 12 dargestellten Schema der Anlage 8 umfasst diese in der nachfolgend aufgeführten Abfolge die folgenden Vorrichtungen: Gegebenenfalls Entfettungsvorrichtung (A), gegebenenfalls Spülvorrichtung (B), gegebenenfalls Beizvorrichtung (C), gegebenenfalls Spülvorrichtung (D), gegebenenfalls Flussmittelbehandlungsvorrichtung (E), gegebenenfalls Trocknungsvorrichtung (F) und Feuerverzinkungsvorrichtung 9 (G).

In einem weiteren nicht dargestellten Schema der Anlage 8 zur Feuerverzinkung kann diese auch gegebenenfalls eine Abkühlvorrichtung (H) und gegebenenfalls eine Nachbearbeitungs- bzw. Nachbehandlungsvorrichtung (I) aufweisen.

Für weitergehende Einzelheiten zu der Anlage 8 kann auf die vorstehenden allgemeinen Ausführungen zu der Anlage zur Feuerverzinkung 8 nach der vorliegenden Erfindung verwiesen werden.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die folgende Erfindung jedoch keinesfalls beschränken sollen, sondern lediglich die beispielhafte und nicht limitierende Durchführungsweise und Ausgestaltung erläutern.

## AUSFÜHRUNGSBEISPIELE:

### Allgemeine Vorschrift zur Durchführung (erfindungsgemäß)

Die nachfolgenden Ausführungsbeispiele zeigen unterschiedliche Trage- und/oder Haltemittel, welche sich durch ihre Beschichtung und/oder ihrer Ausgestaltungsform voneinander unterscheiden. Die Trage- und/oder Haltemittel werden demselben Verzinkungsverfahren zugeführt. Sie dienen dabei zum Transport und/oder zur Fixierung eines Bauteils, welches ein Stahl vom Typ S235 aufweist. Das Trage- und/oder Haltemittel wird gemeinsam mit dem Bauteil in die Zinkschmelze der Feuerverzinkungsvorrichtung getaucht, wobei der Bereich des Trage- und/oder Haltemittels, der in die Zinkschmelze getaucht wird, vorab beschichtet worden ist.

Die Beschichtung wird nach dem erfindungsgemäßen Beschichtungsverfahrensablauf gemäß Fig. 11 durchgeführt. Die Schichtdicke der Beschichtung sowie die Beschichtungszusammensetzung werden gemäß den nachfolgenden Angaben variiert.

Die verzinkungsresistente und/oder verzinkungsinerte, insbesondere zumindest im Wesentlichen verzinkungsabweisende, Beschichtung weist eine insbesondere polymere Silicium/Sauerstoff-Verbindung auf oder ist hieraus gebildet.

Das jeweils durchgeführte Beschichtungsverfahren umfasst dabei die folgenden Verfahrensschritte in der nachfolgend aufgeführten Reihenfolge:

(1) saure Entfettungsbehandlung in einem Entfettungsbad (20 Minuten, 23 °C, pH-Wert < 1, Zusammensetzung des Entfettungsbads gemäß dem sauren Reiniger Ferrosid 7501/1 der Firma alufinish GmbH & Co. KG),
(2) Spülen in einem Spülbad mit Wasser (7 Minuten, 19 °C),
(3) saure Beizbehandlung (45 Minuten, 22 °C, 9,5-% Salzsäure bzw. Chlorwasserstoff (HCl)),
(4) Spülen in einem Spülbad mit Wasser (7 Minuten, 19 °C),

(5) Beschichtung durch Aufsprühen(Zusammensetzung gemäß nachfolgenden Spezifikationen),

(6) Temperaturbehandlung der Beschichtung (Einbrennen) (200 °C heißer Luftstrom, 60 Minuten),

(7) Abkühlung auf Umgebungstemperatur.

Das jeweils durchgeführte Feuerverzinkungsverfahren umfasst dabei die folgenden Verfahrensschritte in der nachfolgend aufgeführten Reihenfolge (wobei die erfindungsgemäß zum Einsatz kommende Anlage entsprechend ausgebildet ist):

(a) saure Entfettungsbehandlung in einem Entfettungsbad (20 Minuten, 23 °C, pH-Wert < 1, Zusammensetzung des Entfettungsbads gemäß dem sauren Reiniger Ferrosid 7501/1 der Firma alufinish GmbH & Co. KG),

(b) saure Beizbehandlung (45 Minuten, 22 °C, 9,5-% Salzsäure bzw. Chlorwasserstoff (HCl)),

(c) Spülen in einem Spülbad mit Wasser (7 Minuten, 19 °C),

(d) Flussmittebehandlung und Flussmittelbad (5 Minuten, 55 °C, Tauchbehandlung, Zinkchlorid-Ammoniumchlorid-Lösung),

(e) Feuerverzinkung (Schmelztauchverzinkung) mit einer aluminiumhaltigen bzw. aluminiumlegierten Zinkschmelze ("Zn/Al-Schmelze") in einem Verzinkungsbad gemäß der DIN EN ISO 1461 und der DASt-Richtlinie 022 (Deutscher Ausschuss für Stahlbau Richtlinie 022 "Feuerverzinken von tragenden Stahlbauteilen") (7,5 Minuten, 451 °C),

(f) Abkühlung des aus dem Verzinkungsbad entnommenen und feuerverzinkten Bauteils sowie des Trage- und/oder Haltemittels in einem Abschreckbad mit Wasser (2 Minuten, 80 °C).

**Bewertungstabelle für die durchgeführten Versuche**

Zur Beurteilung der durchgeführten Versuche (d. h. Bewertung der Güte der verzinkungsinerten Beschichtung auf dem Trage-/Haltemittel) wurde eine qualitative bzw. semi-quantitative Bewertung durchgeführt; diese wird nachfolgend anhand von Symbolen wiedergegeben, wobei die Bedeutung bzw. der Auswertungsschlüssel der Symbole nachfolgend gezeigt ist:

| Symbol | Bedeutung |
|---|---|
| ++ | sehr gute Verformbarkeit<br>keine Zinkanhaftungen<br>keine Verlötung |
| + | gute Verformbarkeit<br>nahezu keine, allenfalls nur geringfügige Zinkanhaftungen nahezu keine Verlötung, nur vereinzelt und im geringen Maße |
| O | Befriedigende Verformbarkeit<br>einige Zinkanhaftungen (insbesondere mehr als 50 % der beschichteten Oberfläche weist Zinkanhaftungen auf) zum Teil ist Verlötung vorhanden, jedoch lässt sich das Bauteil noch ohne Beschädigung der Zinkschicht von dem Trage- und/oder Haltemittel entfernen |
|  | ungenügende Verformbarkeit<br>Der beschichtete Bereich weist Zinkanhaftungen auf (insbesondere mehr als 80 % der beschichteten Oberfläche des Trage- und/oder Haltemittels weist Zinkanhaftungen auf).<br>Das Bauteil ist mit dem Trage- und/oder Haltemittel nach dem Austauchen aus der Zinkschmelze verlötet (wobei sich das Bauteil, nur mit einer Beschädigung von der Zinkschicht entfernen lässt). |
| -- | sehr schlechte Verformbarkeit<br>Mehr als 90 % des beschichteten Bereiches des Trage- und/oder Haltemittels weist Zinkanhaftungen auf.<br>Das Bauteil ist mit dem Trage- und/oder Haltemittel nach dem Austauschen aus der Zinkschmelze verlötet. / Das Bauteil lässt sich nur mit großem Nachbearbeitungsaufwand und nur mit einer einhergehenden Beschädigung der Verzinkungsschicht entfernen. |

**Beispielserie 1**

Es werden verschiedene Trage- und/oder Haltemittel einer zuvor beschriebenen Feuerverzinkung gemeinsam mit den an ihr angeordneten Bauteilen unterzogen, einschließlich entsprechender Vorbehandlungsschritte.

Die Trage- und/oder Haltemittel der Nummer 5 und 6 sowie 11 und 12 weisen die erfindungsgemäße Beschichtung auf. Die übrigen Proben sind mit einer nicht erfindungsgemäßen Beschichtung versehen. Als Trage- und/oder Haltemittel dient entweder ein Draht bzw. ein Anbindedraht oder ein Haken gemäß Fig. 3.

Variation der Trage- und/oder Haltemittel (nicht erfindungsgemäß und erfindungsgemäß)

| Nr. | Beschichtung | Trage- und/oder Haltemittel |
|---|---|---|
| 1 | Wasserglas | Draht |
| 2 | Glasfluss (Email) | Draht |
| 3 | Polyurethanharz (PU-Harz) | Draht |
| 4 | Epoxidharz | Draht |
| 5* | Beschichtung mit mindestens einer Silicium/SauerstoffVerbindung (hier: SILIKOPHEN® 40/W der Firma Evonik als Beschichtungsausgangsmaterial) | Draht |
| 6 * | Beschichtung mit mindestens einer Silicium/SauerstoffVerbindung (hier: DUPLI-COLOR® SUPERTHERM 800 der Firma MOTIP DUPLI als Beschichtungsausgangsmaterial) | Draht |
| 7 | Wasserglas | Haken |
| 8 | Glasfluss | Haken |
| 9 | Polyurethanharz (PU-Harz) | Haken |
| 10 | Epoxidharz | Haken |
| 11 * | Beschichtung mit mindestens einer Silicium/SauerstoffVerbindung(hier: SILIKOPHEN® 40/W der Firma Evonik als Beschichtungsausgangsmaterial) | Haken |
| 12 * | Beschichtung mit mindestens einer Silicium/SauerstoffVerbindung (hier: DUPLI-COLOR® SUPERTHERM 800 der Firma MOTIP DUPLI als Beschichtungsausgangsmaterial) | Haken |
| * erfindungsgemäß | | |

Schichtdicke

Die Schichtdicke der verzinkungsresistenten Beschichtung auf dem Trage-/Haltemittel (Draht bzw. Haken) beträgt etwa 75 $\mu$m.

Ergebnisse im Hinblick auf die Verformung bzw. der Verformbarkeit

| Nr. | Ergebnis |
|---|---|
| 1 | - - |
| 2 | - - |
| 3 | o / - |
| 4 | o / - |

(fortgesetzt)

| Nr. | Ergebnis |
|-----|----------|
| 5 | + + |
| 6 | + + |

Folglich weisen nur die die erfindungsgemäße verzinkungsresistente Beschichtung aufweisenden Trage- und/oder Haltemittel eine sehr gute Verformbarkeit auf, wobei folglich auch ein Aufwickeln des Trage- und/oder Haltemittels, vorzugsweise des Anbindedrahtes, gewährleistet werden kann, ohne dass die Beschichtung abplatzt bzw. beschädigt wird.

Ergebnisse im Hinblick auf die Zinkanhaftungen an der Oberfläche des beschichteten Trage- und/oder Haltemittels bzw. des beschichteten Bereiches des Trage- und/oder Haltemittels

| Nr. | Ergebnis |
|-----|----------|
| 1 | o |
| 2 | o |
| 3 | - - |
| 4 | - - |
| 5 | ++ |
| 6 | ++ |
| 7 | o |
| 8 | o |
| 9 | - - |
| 10 | - - |
| 11 | ++ |
| 12 | ++ |

Ergebnisse im Hinblick auf die Verlötung zwischen dem Trage- und/oder Haltemittel und dem Bauteil nach Austauchen aus der Zinkschmelze bzw. aus dem Verzinkungsbad

| Nr. | Ergebnis |
|-----|----------|
| 1 | o / - |
| 2 | o / - |
| 3 | - - |
| 4 | - - |
| 5 | ++ |
| 6 | ++ |
| 7 | o / - |
| 8 | o / - |
| 9 | - - |

(fortgesetzt)

| Nr. | Ergebnis |
|-----|----------|
| 10 | - - |
| 11 | ++ |
| 12 | ++ |

Allgemeine Erkenntnisse

Anhand der vorgenannten Ergebnisse und Auswertungen der durchgeführten Versuche wird deutlich, dass nur die erfindungsgemäßen verzinkungsresistenten Beschichtungen auf den Trage-/Haltemitteln (vgl. Beispiele Nr. 5 und Nr. 6 sowie Nr. 11 und Nr. 12) den erfindungsgemäßen Anforderungen an das Trage- und/oder Haltemittel genügen. Die erfindungsgemäße Beschichtung zeigt sehr gute Ergebnisse sowohl im Hinblick auf die Verformbarkeit, die nicht auftretende Verlötung bzw. Verbackung mit dem Bauteil und die nicht vorhandenen Zinkanhaftungen an der beschichteten Oberfläche des Trage- und/oder Haltemittels.

**Beispielserie 2 (erfindungsgemäß)**

Die Beispielserie 2 nutzt das erfindungsgemäße Trage- und/oder Haltemittel aus der Beispielserie 1, und zwar gemäß Nr. 11. Die Beschichtung in der Beispielserie 2 weist eine Schichtdicke von etwa 75 $\mu$m auf.

In der Beispielserie 2 wird die Oberflächenvorbehandlung des Trage- und/oder Haltemittels vor Auftrag der Beschichtung variiert. Unter einer chemischen Oberflächenvorbehandlung ist die in der allgemeinen Vorschrift zur Durchführung der Versuche genannte Oberflächenvorbehandlung zu verstehen. Ein Materialabtrag erfolgt dabei vorzugsweise mechanisch, beispielsweise durch eine Anrauhung der Oberfläche oder durch ein Bürsten bzw. Abbürsten der Oberfläche des unbeschichteten Trage- und/oder Haltemittels. Zum Vergleich wird auch ein unbeschichtetes Trage- und/oder Haltemittel, welches keiner Oberflächenvorbehandlung vor Auftrag der Beschichtung unterzogen wird, beschichtet.

Variation der Oberflächenvorbehandlunq

Die nachfolgende Tabelle zeigt die unterschiedlichen Trage- und/oder Haltemittel, die einer Feuerverzinkung sowie dem Beschichtungsverfahren unterzogen worden sind.

| Nr. | Vorbehandlung | Trage- und/oder Haltemittel |
|-----|---------------|----------------------------|
| 1 | chemische Oberflächenvorbehandlung | Haken |
| 2 | Materialabtrag, vorzugsweise mechanische Oberflächenvorbehandlunq | Haken |
| 3 | ohne Vorbehandlung | Haken |

Ergebnisse

| Nr. | Ergebnis: Zinkanhaftungen | Ergebnis: Verlötung |
|-----|---------------------------|---------------------|
| 1 | ++ | ++ |
| 2 | ++ | ++ |
| 3 | o | o |

Die vorgenannte Ergebnisauswertung verdeutlicht, dass eine Oberflächenvorbehandlung, sei sie chemischer oder mechanischer Natur, sinnvoll ist zur Verbesserung der verzinkungsresistenten und/oder verzinkungsinerten Beschichtung. Dabei erhöht eine Oberflächenvorbehandlung die Affinität der unbeschichteten Oberfläche des Trage- und/oder Haltemittels für die auf die unbeschichtete Oberfläche aufzutragende Beschichtung. Verunreinigungen der Beschichtungen werden durch die Oberflächenvorbehandlung, insbesondere durch Reinigung der unbeschichteten Oberfläche des Trage- und/oder Haltemittels zumindest im Wesentlichen vermieden.

**Beispielserie 3 (erfindungsgemäß)**

In der nachfolgenden Beispielserie wird ein als Haken ausgebildetes Trage- und/oder Haltemittel mit einer Beschichtung gemäß der Beispielserie 1, Nr. 11 unter Variation der Schichtdicke untersucht. Das Trage- und/oder Haltemittel hat vor der Beschichtung eine Oberflächenbehandlung gemäß der allgemeinen Versuchsdurchführung durchlaufen.

Variation der Schichtdicke

| Nr. | Schichtdicke in $\mu$m | Trage- und/oder Haltemittel |
|-----|------------------------|------------------------------|
| 1 | 10 | Haken |
| 2 | 25 | Haken |
| 3 | 40 | Haken |
| 4 | 75 | Haken |
| 5 | 100 | Haken |
| 6 | 200 | Haken |

Ergebnisse:

Die nachfolgende Tabelle verdeutlicht das Ergebnis im Hinblick auf die Zinkanhaftungen bzw. im Hinblick auf die Verlötung zwischen dem Trage- und/oder Haltemittel, d. h. dem Haken, und dem Bauteil nach Austauchen aus der Zinkschmelze bzw. nach Austauchen aus dem Verzinkungsbad.

| Nr. | Ergebnis: Zinkanhaftungen | Ergebnis: Verlötung |
|-----|---------------------------|----------------------|
| 1 | + / o | + / o |
| 2 | + | + |
| 3 | ++ / + | ++ / + |
| 4 | ++ | ++ |
| 5 | ++ | ++ |
| 6 | ++ | ++ |

Ab einer Schichtdicke von 75 $\mu$m und größer werden sehr gute Ergebnisse im Hinblick auf die Zinkanhaftungen und die Verlötung erreicht, wobei eine Steigerung der Schichtdicke der Beschichtung ab 75 $\mu$m ein gleichbleibendes Ergebnis in den durchgeführten Versuchen liefert. Bei einer zu geringen Beschichtungsdicke, d. h. also bei etwa 10 $\mu$m, werden noch teils gute bis jedoch auch nur noch befriedigende Ergebnisse im Hinblick auf die Zinkanhaftungen und/oder die Verlötung erhalten. Daher empfiehlt es sich, eine Schichtdicke der Beschichtung auf dem Trage- und/oder Haltemittel größer als 10 $\mu$m, insbesondere mit mindestens 25 $\mu$m, zu wählen.

**Beispielserie 4 (erfindungsgemäß)**

Bei einer großtechnischen Umsetzung der Erfindung ergibt sich, dass ein sehr hohes Einsparpotential für die benötigte Zinkmenge vorhanden ist.

Der durchschnittliche Drahtverbrauch, d. h. also der Anbindedraht für die Trage- und/oder Haltemittel, einer durchschnittlichen Verzinkerei ist etwa 100 t Draht pro Jahr. Derzeit wird im Stand der Technik 70 % dieses Drahtes in der Feuerverzinkung gemeinsam mit dem Bauteil verzinkt. Sofern die Zinkschichtdicke auf dem Draht etwa 80 $\mu$m beträgt, ergibt dies bei einem durchschnittlichen Drahtdurchmesser von 2,5 mm einen Zinkverbrauch von etwa 6 t bis 13 t Zink je 100 t Draht; dies bedeutet bei einem derzeitigen Zinkpreis von 2000,- € je Tonne einen wirtschaftlichen Verlust von 16.000,-€ je 100 t Draht. Durch die erfindungsgemäße Beschichtung des Trage- und/oder Haltemittels kann nicht nur eine unerwünschte Verlötung zwischen dem Bauteil und dem Trage- und/oder Haltemittel vermieden werden, wodurch sich die Nacharbeit um bis zu 60 % reduzieren lässt, sondern es kann auch der Zinkverbrauch aufgrund der verminderten Verzinkung des Trage- und/oder Haltemittels von 8 t Zink je 100 t Trage- und/oder Haltemittel, insbesondere Anbindedraht, auf bis zu 0 t Zink je 100 t Draht herabgesetzt werden. Dies ergibt eine Einsparung von wenigstens 16.000,-€ je 100 t Draht bei einem durchschnittlichen vorgenannten Zinkpreis. Die Steigerung der Prozesseffizienz aufgrund der deutlich verringerten Nacharbeit ist an dieser Stelle noch nicht mit eingerechnet.

Das vorgenannte großtechnische Beispiel verdeutlicht, dass die Erfindung ein hohes Kosteneinsparpotential für den Verzinkungsbetrieb bildet.

Der oben genannte Zinkverbrauch zur Beschichtung eines Drahtes beruht auf der Annahme, dass der Draht eine zylinderförmige Form aufweist und sich die Zinkschicht um den Draht voll umschließt. Das Volumen der Zinkschicht ergibt sich dabei aus

$$V_1 = \pi \cdot h \cdot (R^2 - r^2)$$

mit

$V_1$    Volumen der Zinkschicht
$h$    Länge des Drahtes
$R$    Radius des verzinkten Drahtes
$r$    Radius des unverzinkten Drahtes

Mit der Annahme, dass der unbeschichtete Draht einen Durchmesser von 2,5 mm und demgemäß einen Radius von 1,25 mm und die Zinkschicht eine Schichtdicke von 80 $\mu m$ aufweist ergibt sich:

$$V_1 = \pi \cdot h \cdot ((1{,}25\,mm + 80\,\mu m)^2 - (1{,}25\,mm)^2)$$

Zur Bestimmung der Länge $h$ des Drahtes wird das Volumen des Drahtes berechnet durch:

$$V_2 = \pi \cdot h \cdot r^2$$

mit

$V_2$    Volumen des Drahtes.

Unter der Annahme, dass der Draht eine Dichte von

$$\rho_D = 7700\,\frac{kg}{m^3}$$

aufweist, ergibt sich bei einer Masse von 100 t:

$$V_2 = \frac{m_D}{\rho_D} = \frac{100 \cdot 10^3}{7700}\,\frac{kg\ m^3}{kg}$$

$$V_2 = 12{,}987\,m^3$$

mit

$m_D$    als Masse des Drahtes
$\rho_D$    Dichte des Drahtes

Daraus folgt:

$$h = \frac{V_2}{\pi \cdot r^2}$$

$$h = \frac{12,987\ m^3}{\pi \cdot (10^{-3})^2\ 1,25^2\ m^2}$$

$$h = 2645689,915\ m$$

Daraus folgt für das Volumen $V_2$ der Zinkschicht

$$V_1 = \pi \cdot 2645689,915 \cdot ((1,25 \cdot 10^{-3} + 80 \cdot 10^{-6})^2 - (1,25 \cdot 10^{-3})^2)\ m^3$$

$$V_1 = 1,7155\ m^3$$

Mit einer Dichte $\rho_{Zn}$ von 7140 kg/m$^3$ der Zinkschicht ergibt sich:

$$m_{Zn} = \rho_{Zn} \cdot V_1$$

$$m_{Zn} = 7140\ \frac{kg}{m^3} \cdot 1,7155\ m^3$$

$$m_{Zn} = 12248,67\ kg$$

$$m_{Zn} \approx 12\ t$$

Demzufolge werden pro 100 t Draht ca. 12 t Zink verbraucht.

**Bezugszeichenliste:**

| | |
|---|---|
| 1 | Bauteil |
| 2 | Trage- und/oder Haltemittel |
| 3 | Zinkschmelze |
| 4 | Verzinkungskessel |
| 5 | Beschichtung |
| 6 | Oberfläche des beschichteten Trage- und/oder Haltemittels |
| 7 | Schichtdicke |
| 8 | Anlage zur Feuerverzinkung |
| 9 | Feuerverzinkungsvorrichtung |
| 10 | Traverse |
| 11 | Federmittel |
| 12 | unbeschichtetes Trage- und/oder Haltemittel |
| $V_1$ | Volumen der Zinkschicht |
| $V_2$ | Volumen des Drahtes |
| $h$ | Länge des Drahtes |
| $R$ | Radius des verzinkten Drahtes |
| $r$ | Radius des unverzinkten Drahtes |

$m_D$      Masse des unverzinkten Drahtes
$\rho_D$      Dichte Draht
$m_{Zn}$      Masse der Zinkschicht
$\rho_{Zn}$      Dichte der Zinkschicht

**Patentansprüche**

1. Verfahren zur Feuerverzinkung eines Bauteils (1),
   wobei das Bauteil (1) mittels eines Trage- und/oder Haltemittels (2) in einen mit einer Zinkschmelze (3) befüllten Verzinkungskessel (4) getaucht wird, wobei das Trage- und/oder Haltemittel (2) zumindest im Wesentlichen gemeinsam mit dem Bauteil (1) zumindest bereichsweise in die Zinkschmelze (3) eingetaucht und nach Abschluss des Feuerverzinkungsvorgangs wieder ausgetaucht wird,
   wobei das Trage- und/oder Haltemittel (2) zumindest bereichsweise mit einer verzinkungsresistenten und/oder verzinkungsinerten Beschichtung (5) versehen ist, wobei die verzinkungsresistente und/oder verzinkungsinerte Beschichtung (5) mindestens eine Silicium/Sauerstoff-Verbindung umfasst oder hieraus gebildet ist und wobei die Beschichtung (5) des Trage- und/oder Haltemittels (2) durch Temperaturbehandlung eines polysiloxanhaltigen Ausgangsmaterials erhältlich ist.

2. Feuerverzinkungsverfahren nach Anspruch 1,
   wobei der die Beschichtung (5) aufweisende Bereich der Oberfläche (6) des Trage- und/oder Haltemittels (2) nach Abschluss des Feuerverzinkungsvorgangs und/oder nach Austauchen aus dem mit der Zinkschmelze (3) befüllten Verzinkungskessel (4) zumindest im Wesentlichen keine Zinkanhaftungen aufweist.

3. Feuerverzinkungsverfahren nach Anspruch 1 oder 2,
   wobei das Trage- und/oder Haltemittel (2) als Befestigungs- und/oder Anschlagsmittel, als Haken, als Gestell, als Auflage und/oder als Traverse (10) oder dergleichen ausgebildet ist.

4. Feuerverzinkungsverfahren nach einem der vorangehenden Ansprüche,
   wobei die Beschichtung (5) eine festhaftende und/oder trockene und/oder temperaturresistente und/oder chemikalienresistente Oberfläche (6) auf dem Trage- und/oder Haltemittel (2) ausbildet.

5. Feuerverzinkungsverfahren nach einem der vorangehenden Ansprüche,
   wobei die Beschichtung (5) des Trage- und/oder Haltemittels (2) durch Härtung und/oder Einbrennen eines polysiloxanhaltigen Ausgangsmaterials in einer oxidierenden und/oder sauerstoffhaltigen Atmosphäre und/oder bei einer Temperatur im Bereich von 150 °C bis 800 °C, vorzugsweise bei einer Temperatur von mindestens 160 °C, bevorzugt bei einer Temperatur von mindestens 250 °C, erhältlich ist; und/oder wobei die Beschichtung (5) des Trage- und/oder Haltemittels (2) in die Oberfläche (6) des Trage- und/oder Haltemittels (2) durch Temperaturbehandlung eines polysiloxanhaltigen Ausgangsmaterials eingebrannt ist.

6. Feuerverzinkungsverfahren nach Anspruch 5,
   wobei das polysiloxanhaltige Ausgangsmaterial aus der Gruppe von Polysiloxanen, insbesondere Polyorganosiloxanen, vorzugsweise Polyalkylsiloxanen, Polyarylsiloxanen, Polyarylalkylsiloxanen, Polyorganosilalkylenen und/oder Polysilarylensiloxanen sowie deren Mischungen und Kombinationen, gegebenenfalls in Kombination mit mindestens einem weiteren, hiervon verschiedenen organischen Harz, insbesondere ausgewählt aus der Gruppe von Alkyd-, Epoxid-, Melamin-, Phenol- und/oder Polyesterharzen sowie deren Mischungen oder Kombinationen, ausgewählt ist.

7. Feuerverzinkungsverfahren nach einem der vorangehenden Ansprüche,
   wobei die Beschichtung (5) zusätzlich mit einem insbesondere metallischen und/oder mineralische (anorganische) Zusatzstoff (Additiv) versehen ist oder dieses enthält.

8. Verfahren zur Beschichtung eines Trage- und/oder Haltemittels (2) zur Verwendung in einem Feuerverzinkungsverfahren,
   wobei das Trage- und/oder Haltemittel (2) zumindest bereichsweise mit einer verzinkungsresistenten und/oder verzinkungsinerten Beschichtung (5) versehen wird, wobei die verzinkungsresistente und/oder verzinkungsinerte Beschichtung (5) mindestens eine Silicium/Sauerstoff-Verbindung umfasst oder hieraus gebildet ist und wobei die Beschichtung (5) des Trage- und/oder Haltemittels (2) durch Temperaturbehandlung eines polysiloxanhaltigen Ausgangsmaterials erhalten wird.

9. Beschichtungsverfahren nach Anspruch 8,
wobei die Beschichtung (5), insbesondere nach Oberflächenvorbehandlung, durch Spritzen, Aufsprühen, Tauchen, Walzen und/oder Pressen auf die Oberfläche (6) des Trage- und/oder Haltemittels (2) aufgebracht wird.

10. Beschichtungsverfahren nach Anspruch 8 oder 9,
wobei die Beschichtung (5) als eine festhaftende und/oder trockene und/oder temperaturresistente, insbesondere zumindest im Wesentlichen bis Temperaturen von bis zu mindestens 460 °C temperaturresistente, und/oder chemikalienresistente Oberfläche (6) auf dem Trage- und/oder Haltemittel (2) ausgebildet und/oder aufgebracht wird.

11. Beschichtungsverfahren nach einem der vorgehenden Ansprüche,
wobei die Beschichtung (5) mit einer Auftragsmenge, berechnet als Flächengewicht der Beschichtung (5), im Bereich von 0,1 bis 150 g/m$^2$, bevorzugt von 0,3 bis 100 g/m$^2$, weiter bevorzugt von 0,5 bis 50 g/m$^2$, auf das Trage- und/oder Haltemittel (2) aufgebracht wird; und/oder
wobei die Beschichtung (5) mit einer Schichtdicke (7) im Bereich von 1 bis 1.000 $\mu$m, insbesondere im Bereich von 2 bis 750 $\mu$m, vorzugsweise im Bereich von 3 bis 500 $\mu$m, bevorzugt im Bereich von 5 bis 250 $\mu$m, weiter bevorzugt im Bereich von 5 bis 200 $\mu$m, noch mehr bevorzugt im Bereich von 10 bis 100 $\mu$m, ganz besonders bevorzugt im Bereich von 25 bis 95 $\mu$m, auf das Trage- und/oder Haltemittel (2) aufgebracht wird.

12. Beschichtungsverfahren nach einem der vorgehenden Ansprüche,
wobei die Beschichtung (5) des Trage- und/oder Haltemittels (2) durch Härtung und/oder Einbrennen eines polysiloxanhaltigen Ausgangsmaterials in einer oxidierenden und/oder sauerstoffhaltigen Atmosphäre und/oder bei einer Temperatur im Bereich von 150 °C bis 800 °C, vorzugsweise bei einer Temperatur von mindestens 160 °C, bevorzugt bei einer Temperatur von mindestens 250 °C, erhalten wird; und/oder
wobei die Beschichtung (5) des Trage- und/oder Haltemittels (2) in die Oberfläche (6) des Trage- und/oder Haltemittels (2) durch Temperaturbehandlung eines polysiloxanhaltigen Ausgangsmaterials eingebrannt wird.

13. Beschichtungsverfahren nach Anspruch 12,
wobei das polysiloxanhaltige Ausgangsmaterial aus der Gruppe von Polysiloxanen, insbesondere Polyorganosiloxanen, vorzugsweise Polyalkylsiloxanen, Polyarylsiloxanen, Polyarylalkylsiloxanen, Polyorganosilalkylenen und/oder Polysilarylensiloxanen sowie deren Mischungen und Kombinationen, gegebenenfalls in Kombination mit mindestens einem weiteren, hiervon verschiedenen organischen Harz, insbesondere ausgewählt aus der Gruppe von Alkyd-, Epoxid-, Melamin-, Phenol- und/oder Polyesterharzen sowie deren Mischungen oder Kombinationen, ausgewählt wird.

14. Beschichtungsverfahren nach einem der vorgehenden Ansprüche,
wobei die Materialzusammensetzung der Beschichtung (5) und/oder die Inhaltsstoffe der Beschichtung (5) und/oder die Silicium/Sauerstoff-Verbindung sowie gegebenenfalls vorhandene weitere Komponenten der Beschichtung (5) in mindestens einem Lösungs- und/oder Dispergiermittel gelöst und/oder dispergiert wird/werden.

15. Trage- und/oder Haltemittel (2) zur Verwendung in einem Feuerverzinkungsverfahren zum Transport und/oder zur Halterung und/oder zur Fixierung eines Bauteils (1),
wobei das Trage- und/oder Haltemittel (2) zumindest bereichsweise mit einer verzinkungsresistenten und/oder verzinkungsinerten Beschichtung (5) versehen ist, wobei die verzinkungsresistente und/oder verzinkungsinerte Beschichtung (5) mindestens eine Silicium/Sauerstoff-Verbindung umfasst oder hieraus gebildet ist und wobei die Beschichtung (5) des Trage- und/oder Haltemittels (2) durch Temperaturbehandlung eines polysiloxanhaltigen Ausgangsmaterials erhältlich ist.

## Claims

1. A method for hot-dip galvanizing a component (1),
wherein the component (1) is immersed by means of a carrying and/or holding means (2) in a galvanizing bath (4) filled with a molten zinc (3), wherein the carrying and/or holding means (2) is at least substantially together with the component (1) at least in some regions immersed in the molten zinc (3) and removed again after the hot-dip galvanizing process,
wherein the carrying and/or holding means (2) is provided at least in some regions with a galvanization-resistant and/or galvanization-inert coating (5),
wherein the galvanization-resistant and/or galvanization-inert coating (5) comprises or is formed from at least one silicon/oxygen composite, and
wherein the coating (5) of the carrying and/or holding means (2) is obtainable by heat treatment of a polysiloxane-containing source material.

2.  The hot-dip galvanizing method according to claim 1,
    wherein the region of the surface (6) of the carrying and/or holding means (2) having the coating (5) has at least substantially no zinc adhesions after completion of the hot-dip galvanizing process and/or after removal from the galvanizing bath (4) filled with the molten zinc (3).

3.  The hot-dip galvanizing method according to claim 1 or 2,
    wherein the carrying and/or holding means (2) is designed as a fastening and/or lifting means, as a hook, as a frame, as a support and/or as a traverse (10) or the like.

4.  The hot-dip galvanizing method according to any one of the preceding claims,
    wherein the coating (5) forms a bonded and/or dry and/or temperature-resistant and/or chemical-resistant surface (6) on the carrying and/or holding means (2).

5.  The hot-dip galvanizing method according to any one of the preceding claims,
    wherein the coating (5) of the carrying and/or holding means (2) is obtainable by means of curing and/or burning a polysiloxane-containing source material in an oxidizing and/or oxygen-containing atmosphere and/or at a temperature in the range from 150°C to 800°C, preferably at a temperature of at least 160°C, preferably at a temperature of at least 250°C; and/or
    wherein the coating (5) of the carrying and/or holding means (2) is burned into the surface (6) of the carrying and/or holding means (2) by heat treatment of a polysiloxane-containing source material.

6.  The hot-dip galvanizing method according to claim 5,
    wherein the polysiloxane-containing source material is selected from the group of polysiloxanes, in particular polyorganosiloxanes, preferably polyalkylsiloxanes, polyarylsiloxanes, polyarylalkylsiloxanes, polyorganosilalkylenes and/or polysilarylenesiloxanes and mixtures and combinations thereof, optionally in combination with at least one further organic resin different therefrom, in particular selected from the group of alkyd, epoxy, melamine, phenolic and/or polyester resins and mixtures or combinations thereof.

7.  The hot-dip galvanizing method according to any one of the preceding claims,
    wherein the coating (5) is additionally provided with or contains an in particular metallic and/or mineral (inorganic) additive.

8.  A method for coating a carrying and/or holding means (2) for use in a hot-dip galvanizing method,
    wherein the carrying and/or holding means (2) is provided at least in some regions with a galvanization-resistant and/or galvanization-inert coating (5),
    wherein the galvanization-resistant and/or galvanization-inert coating (5) comprises or is formed from at least one silicon/oxygen composite, and
    wherein the coating (5) of the carrying and/or holding means (2) is obtained by heat treatment of a polysiloxane-containing source material.

9.  The coating method according to claim 8,
    wherein the coating (5), in particular after surface pretreatment, is applied to the surface (6) of the carrying and/or holding means (2) by extrusion, spraying, dipping, rolling and/or pressing.

10. The coating method according to claim 8 or 9,
    wherein the coating (5) is formed on and/or applied to the carrying and/or holding means (2) as a bonded and/or dry and/or temperature-resistant, in particular at least substantially temperature-resistant up to temperatures of up to at least 460°C, and/or chemical-resistant surface (6).

11. The coating method according to any one of the preceding claims,
    wherein the coating (5) is applied to the carrying and/or holding means (2) with an application amount, calculated as the surface weight of the coating (5), in the range from 0.1 to 150 g/m$^2$, preferably from 0.3 to 100 g/m$^2$, more

preferably from 0.5 to 50 g/m$^2$; and/or
wherein the coating (5) is applied to the carrying and/or holding means (2) with a layer thickness (7) in the range from 1 to 1,000 $\mu$m, in particular in the range from 2 to 750 $\mu$m, preferably in the range from 3 to 500 $\mu$m, preferably in the range from 5 to 250 $\mu$m, more preferably in the range from 5 to 200 $\mu$m, even more preferably in the range from 10 to 100 $\mu$m, very particularly preferably in the range from 25 to 95 $\mu$m.

12. The coating method according to any one of the preceding claims,
wherein the coating (5) of the carrying and/or holding means (2) is obtained by means of curing and/or burning a polysiloxane-containing source material in an oxidizing and/or oxygen-containing atmosphere and/or at a temperature in the range from 150°C to 800°C, preferably at a temperature of at least 160°C, more preferably at a temperature of at least 250°C; and/or
wherein the coating (5) of the carrying and/or holding means (2) is burned into the surface (6) of the carrying and/or holding means (2) by heat treatment of a polysiloxane-containing source material.

13. The coating method according to claim 12,
wherein the polysiloxane-containing source material is selected from the group of polysiloxanes, in particular polyorganosiloxanes, preferably polyalkylsiloxanes, polyarylsiloxanes, polyarylalkylsiloxanes, polyorganosilalkylenes and/or polysilarylenesiloxanes and mixtures and combinations thereof, optionally in combination with at least one further organic resin different therefrom, in particular selected from the group of alkyd, epoxy, melamine, phenolic and/or polyester resins and mixtures or combinations thereof.

14. The coating method according to any one of the preceding claims,
wherein the material composition of the coating (5) and/or the ingredients of the coating (5) and/or the silicon/oxygen composite and any other components of the coating (5) present is/are dissolved and/or dispersed in at least one solvent and/or dispersant.

15. A carrying and/or holding means (2) for use in a hot-dip galvanizing method for transporting and/or holding and/or fixing a component (1),
wherein the carrying and/or holding means (2) is provided at least in some regions with a galvanization-resistant and/or galvanization-inert coating (5),
wherein the galvanization-resistant and/or galvanization-inert coating (5) comprises or is formed from at least one silicon/oxygen composite, and
wherein the coating (5) of the carrying and/or holding means (2) is obtainable by heat treatment of a polysiloxane-containing source material.

**Revendications**

1. Procédé de galvanisation à chaud d'un composant (1),
dans lequel le composant (1) est immergé au moyen d'un moyen de support et/ou de fixation (2) dans une cuve de galvanisation (4) remplie d'un bain de zinc (3), le moyen de transport et/ou de fixation (2) au moins essentiellement conjointement avec le composant (1) est au moins par zones immergé dans le bain de zinc (3) et est à nouveau retiré après l'achèvement du processus de galvanisation à chaud terminé,
dans lequel le moyen de support et/ou de fixation (2) est pourvu au moins dans certaines zones d'un revêtement résistant à la galvanisation et/ou inerte à la galvanisation (5),
dans lequel le revêtement résistant à la galvanisation et/ou inerte à la galvanisation (5) comprend au moins un composé de silicium/oxygène ou en est formé, et
dans lequel le revêtement (5) du moyen de support et/ou de fixation (2) peut être obtenu par traitement thermique d'un matériau de départ contenant du polysiloxane.

2. Procédé de galvanisation à chaud selon la revendication 1,
dans lequel la zone présentant le revêtement (5) de la surface (6) du moyen de support et/ou de fixation (2) ne présente au moins essentiellement aucune adhérence de zinc après l'achèvement du processus de galvanisation à chaud et/ou après la sortie de la cuve de galvanisation (4) remplie du bain de zinc (3).

3. Procédé de galvanisation à chaud selon la revendication 1 ou 2,
dans lequel le moyen de support et/ou de fixation (2) est conçu comme un moyen de fixation et/ou d'arrêt, comme un crochet, comme un cadre, comme un support et/ou comme une traverse (10) ou similaire.

4. Procédé de galvanisation à chaud selon l'une des revendications précédentes,
dans lequel le revêtement (5) forme une surface (6) fermement adhérente et/ou sèche et/ou résistant à la température et/ou résistant aux produits chimiques sur le moyen de support et/ou de fixation (2).

5. Procédé de galvanisation à chaud selon l'une des revendications précédentes,
dans lequel le revêtement (5) du moyen de support et/ou de fixation (2) est obtenu par durcissement et/ou cuisson d'une matière de départ contenant du polysiloxane dans une atmosphère oxydante et/ou contenant de l'oxygène et/ou à une température comprise entre 150 °C et 800 °C, de préférence à une température d'au moins 160 °C, de préférence à une température d'au moins 250 °C ; et/ou
dans lequel le revêtement (5) du moyen de support et/ou de fixation (2) est cuit au niveau de la surface (6) du moyen de support et/ou de fixation (2) par traitement thermique d'un matériau de départ contenant un polysiloxane.

6. Procédé de galvanisation à chaud selon la revendication 5,
dans lequel le matériau de départ contenant un polysiloxane est choisi parmi le groupe des polysiloxanes, en particulier des polyorganosiloxanes, de préférence des polyalkylsiloxanes, des polyarylsiloxanes, des polyarylalkylsiloxanes, des polyorganosilalkylènes et/ou des polysilarylène-siloxanes et leurs mélanges et combinaisons, éventuellement en combinaison avec au moins une autre résine organique qui en est différente, en particulier choisie parmi le groupe des résines alkydes, époxy, de mélamine, phénoliques et/ou de polyester et leurs mélanges ou combinaisons.

7. Procédé de galvanisation à chaud selon l'une des revendications précédentes,
dans lequel le revêtement (5) est en outre pourvu d'un additif en particulier métallique et/ou minéral (inorganique) ou le contient.

8. Procédé de revêtement d'un moyen de support et/ou de fixation (2) destiné à être utilisé dans un procédé de galvanisation à chaud,
dans lequel le moyen de support et/ou de fixation (2) est pourvu au moins dans certaines zones d'un revêtement résistant à la galvanisation et/ou inerte à la galvanisation (5),
dans lequel le revêtement résistant à la galvanisation et/ou inerte à la galvanisation (5) comprend au moins un composé de silicium/oxygène ou en est formé, et
dans lequel le revêtement (5) du moyen de support et/ou de fixation (2) peut être obtenu par traitement thermique d'un matériau de départ contenant un polysiloxane.

9. Procédé de revêtement selon la revendication 8,
dans lequel le revêtement (5), en particulier après prétraitement de surface, est appliqué sur la surface (6) des moyens de support et/ou de fixation (2) par au pistolet, par pulvérisation, trempage, au rouleau et/ou à la presse.

10. Procédé de revêtement selon la revendication 8 ou 9,
dans lequel le revêtement (5) est formé et/ou appliqué sur les moyens de support et/ou de fixation (2) en tant que surface (6) fermement adhérente et/ou sèche et/ou résistant à la température, en particulier au moins sensiblement jusqu'à des températures jusqu'à au moins 460 °C, et/ou résistant aux produits chimiques.

11. Procédé de revêtement selon l'une des revendications précédentes,
dans lequel le revêtement (5) est appliqué sur le moyen de support et/ou de fixation (2) avec une quantité d'application, calculée comme la masse surfacique du revêtement (5), dans la plage de 0,1 à 150 g/m$^2$, de préférence de 0,3 à 100 g/m$^2$, plus préférablement de 0,5 à 50 g/m$^2$ ; et/ou
dans lequel le revêtement (5) est appliqué sur le moyen de support et/ou de fixation (2) avec une épaisseur de couche (7) dans la plage de 1 à 1000 μm, en particulier dans la plage de 2 à 750 μm, de préférence dans la plage de 3 à 500 μm, de préférence dans la plage de 5 à 250 μm, plus préférentiellement dans la plage de 5 à 200 μm, encore plus préférentiellement dans la plage de 10 à 100 μm, de manière tout particulièrement préférée dans la plage de 25 à 95 μm.

12. Procédé de revêtement selon l'une des revendications précédentes,
dans lequel le revêtement (5) du moyen de support et/ou de fixation (2) est obtenu par durcissement et/ou cuisson d'une matière de départ contenant un polysiloxane dans une atmosphère oxydante et/ou contenant de l'oxygène et/ou à une température comprise entre 150 °C et 800 °C, de préférence à une température d'au moins 160 °C, de préférence à une température d'au moins 250 °C ; et/ou
dans lequel le revêtement (5) du moyen de support et/ou de fixation (2) est cuit au niveau de la surface (6) du moyen de support et/ou de fixation (2) par traitement thermique d'un matériau de départ contenant un polysiloxane.

13. Procédé de revêtement selon la revendication 12,
dans lequel le matériau de départ contenant un polysiloxane est choisi parmi le groupe des polysiloxanes, en particulier des polyorganosiloxanes, de préférence des polyalkylsiloxanes, des polyarylsiloxanes, des polyarylalkylsiloxanes, des polyorganosilalkylènes et/ou des polysilarylène-siloxanes et leurs mélanges et combinaisons, éventuellement en combinaison avec au moins une autre résine organique qui en est différente, en particulier choisie parmi le groupe des résines alkydes, époxy, de mélamine, phénoliques et/ou de polyester et leurs mélanges ou combinaisons.

14. Procédé de revêtement selon l'une des revendications précédentes,
dans lequel la composition de matériau du revêtement (5) et/ou les ingrédients du revêtement (5) et/ou le composé de silicium/oxygène et tous autres composants du revêtement (5) éventuellement présents sont dissous et/ou dispersés dans au moins un solvant et/ou un dispersant.

15. Moyens de support et/ou de fixation (2) destinés à être utilisés dans un procédé de galvanisation à chaud pour transporter et/ou maintenir et/ou fixer un composant (1),
dans lequel le moyen de support et/ou de fixation (2) est pourvu au moins dans certaines zones d'un revêtement résistant à la galvanisation et/ou inerte à la galvanisation (5),
dans lequel le revêtement résistant à la galvanisation et/ou inerte à la galvanisation (5) comprend au moins un composé de silicium/oxygène ou en est formé, et
dans lequel le revêtement (5) du moyen de support et/ou de fixation (2) peut être obtenu par traitement thermique d'un matériau de départ contenant un polysiloxane.

Fig. 1

Fig. 2

Fig. 3

Fig. 4

Fig. 5

2

Fig. 6

Fig. 7

Fig. 8

Fig. 9

| Entfettung | → | Spülen | → | Beizen | → | Spülen | → | Flussmittel-behandlung | → | Trocknung |

Schritt a)    Schritt b)    Schritt c)    Schritt d)    Schritt e)    Schritt f)

Feuer-verzinkung

Schritt g)

Abkühlen

Schritt h)

Nachbearbeitung/
Nachbehandlung

Schritt i)

Fig. 10

Fig. 11

Schritt 1: Entfettung → Schritt 2: Spülen → Schritt 3: Beizen → Schritt 4: Spülen → Schritt 5: Beschichtung → Schritt 6: Temperatur-behandlung

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002042512 A1
- EP 1352100 B1
- DE 60124767 T2
- US 20030219543 A1
- DE 10124468 A1
- DE 3720965 A1